(19) Europäisches Patentamt
European Patent Office
Office européen des brevets

(11) **EP 2 667 474 A2**

(12) **EUROPEAN PATENT APPLICATION**

(43) Date of publication:
**27.11.2013 Bulletin 2013/48**

(51) Int Cl.:
***H02J 3/14*** *(2006.01)*

(21) Application number: **13168894.7**

(22) Date of filing: **23.05.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **24.05.2012 JP 2012119101**

(71) Applicant: **FUJITSU LIMITED**
**Kawasaki-shi,**
**Kanagawa 211-8588 (JP)**

(72) Inventors:
• **Takahashi, Satoru**
**Kanagawa 211-8588 (JP)**
• **Sonoda, Toshihiro**
**Kanagawa 211-8588 (JP)**
• **Kitajima, Hironobu**
**Kanagawa 211-8588 (JP)**

(74) Representative: **HOFFMANN EITLE**
**Patent- und Rechtsanwälte**
**Arabellastrasse 4**
**81925 München (DE)**

(54) **Information processing apparatus, method for processing information, and information processing system**

(57)     An information processing apparatus (1) includes a power state control unit (9) that performs control, when it has been detected that there is a device (3) among a plurality of devices each including a battery for which a state of an external power supply has changed from on to off, such that the battery for which the state of the external power supply has changed from on to off is not charged, an operation information obtaining unit (10) that obtains a plurality of pieces of information regarding operation states, in each of which information regarding the state of the external power supply and information regarding a power receiving state, a power information obtaining unit (11) that obtains total power information including a total value of power consumption of the plurality of devices, and a power calculation unit (12) that calculates the power consumption of each of the plurality of devices in each operation state.

FIG. 1

**Description**

TECHNICAL FIELD

The embodiment discussed herein is related to an information processing apparatus, a method for processing information, and an information processing system.

BACKGROUND ART

In these years, demand response (DR) is known as a method used by an electric utility for suppressing peak power of devices used by customers,. The DR is a method used by an electric utility monitoring demand in a power network for controlling the power consumption of devices used by customers in accordance with the demand.

In the DR, for example, a smart outlet capable of measuring the power consumption of a device coupled thereto is used as a measuring device for estimating the power consumption of a device used by a customer. The smart outlet is a device including a power tap and a power sensor. The power consumption of a device coupled to the smart outlet may be measured by the power sensor.

Examples of the related art include, for example, Japanese Laid-open Patent Publication No. 5-233011, Japanese Laid-open Patent Publication No. 2004-280618, Japanese Laid-open Patent Publication No. 2005-258530, and Japanese Laid-open Patent Publication No. 2010-225133.

In order to realize effective DR, it is preferable to be able to accurately estimate the power consumption of devices. However, if the smart outlet is coupled to each device, the size of equipment undesirably increases, which may cause disadvantages in terms of cost.

An aspect provides an information processing apparatus, a method for processing information, an information processing system, and an information processing program capable of more accurately estimating the power consumption of each device without connecting a smart outlet to each device.

DISCLOSURE OF THE INVENTION

PROBLEM TO BE SOLVED BY THE INVENTION

In view of the foregoing, it is an object of the present embodiment to provide an information processing apparatus, a method for processing information, an information processing system, and a computer-readable recording medium capable of more accurately estimating the power consumption of each device without connecting a smart outlet to each device can be determined.

MEANS OF SOLVING THE PROBLEM

According to an aspect of the invention, an information processing apparatus includes a memory; and a processor coupled to the memory and configured to perform control, when it has been detected that there is a device among a plurality of devices each including a battery charged by at least part of power supplied from an alternating power supply for which a state of an external power supply has changed from on to off, such that the battery of the device for which the state of the external power supply has changed from on to off is not charged, obtain a plurality of pieces of information regarding operation states, in each of which information regarding the state of the external power supply and information regarding a power receiving state are associated with each other, from the plurality of devices, obtain total power information including a total value of power consumption of the plurality of devices corresponding to the plurality of pieces of information regarding the operation states, and calculate the power consumption of each of the plurality of devices in each operation state based on the total power information and each of the plurality of pieces of information regarding the operation states.

EFFECTS OF THE INVENTION

According to the information processing apparatus, a method for processing information, an information processing system, and a computer-readable recording medium, it becomes possible to estimate the power consumption of each device more accurately without connecting a smart outlet to each device.

BRIEF DESCRIPTION OF THE DRAWINGS

FIG. 1 is a diagram illustrating an example of an information processing system according to an embodiment;

FIG. 2 is a flowchart illustrating an example of a process executed by an information processing apparatus according to the embodiment;

FIGs. 3A to 3C illustrate examples of a table indicating the power consumption of a device using the operation state and a power supply of the device as parameters;

FIG. 4 is a flowchart illustrating an example of a method for controlling charging of batteries of devices;

FIG. 5 is a sequence diagram relating to the example of the method for controlling charging of the batteries of the devices;

FIG. 6 is a flowchart illustrating an example of a method for calculating the power consumption of the devices according to the embodiment;

FIG. 7 is a sequence diagram relating to the example of the method for calculating the power consumption of the devices according to the embodiment;

FIG. 8 is a diagram illustrating an example of data regarding total power consumption and the operation state of the devices at obtaining timings;

FIG. 9 is a diagram illustrating an example of a matrix y representing total power information and a matrix A' representing operation information obtained from the data illustrated in FIG. 8;

FIG. 10 is a transposed matrix $A'^T$ of the matrix A' illustrated in FIG. 9;

FIG. 11 is a diagram illustrating a result of calculation of a matrix $(A'^T \times A')$;

FIG. 12 is a diagram illustrating a result of calculation of a transposed matrix $(A'^T \times A')^{-1}$ of the matrix $(A'^T \times A')$;

FIG. 13 is a diagram illustrating a result of calculation of a matrix $(A'^T \times y)$;

FIG. 14 is a diagram illustrating a result of calculation of a matrix X";

FIG. 15 is a diagram illustrating the estimated power consumption of each device obtained from FIG. 14;

FIGs. 16A and 16B are examples of a table indicating the estimated power consumption of a device in each operation state;

FIG. 17 is a flowchart illustrating an example of a process executed by a power control client of each device according to the embodiment;

FIG. 18 is a flowchart illustrating an example of evaluation of the accuracy of the estimated power consumption according to the embodiment;

FIG. 19 is a sequence diagram illustrating the example of the evaluation of the accuracy of the estimated power consumption according to the embodiment; and

FIG. 20 is a flowchart illustrating a method for controlling the power states of devices used by an information processing apparatus according to a modification of the embodiment.

## DESCRIPTION OF THE REFERENCE NUMERALS

| | |
|---|---|
| 1 | information processing apparatus |
| 2 | distribution switchboard |
| 3, 4 | device |
| 5 | initial setting unit |
| 6 | input device |
| 7 | storage unit |
| 8 | operation state monitoring unit |
| 9 | power state control unit |
| 10 | operation information obtaining unit |
| 11 | power information obtaining unit |
| 12 | power calculation unit |
| 13 | estimation evaluation unit |

## BEST MODE OF CARRYING OUT THE INVENTION

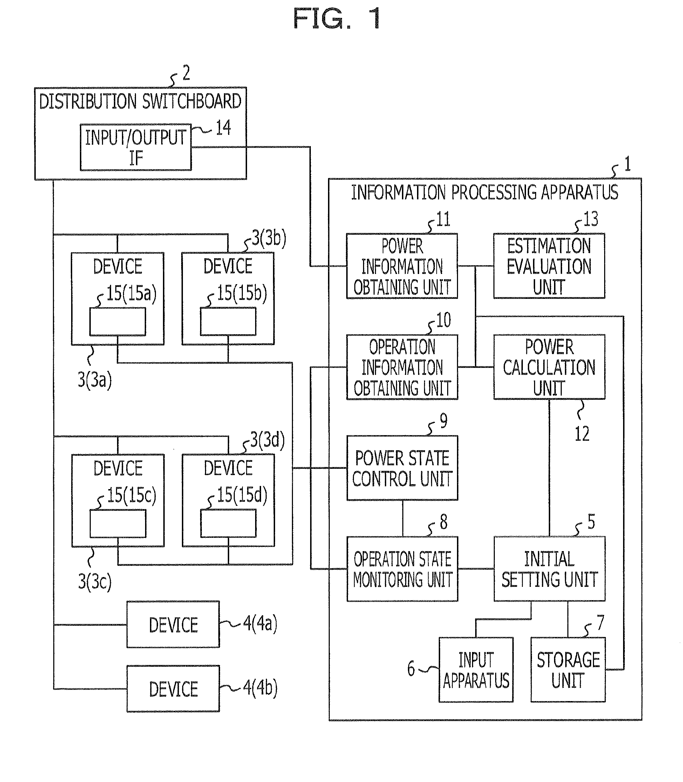

An embodiment will be specifically described hereinafter with reference to FIGs. 1 to 20.

FIG. 1 is a diagram illustrating an example of an information processing system according to the embodiment. As illustrated in FIG. 1, the information processing system includes an information processing apparatus 1, a distribution switchboard 2, devices 3, and devices 4. The information processing apparatus 1 is communicably coupled to the distribution switchboard 2 and the devices 3. The distribution switchboard 2 is electrically coupled to the devices 3 and the devices 4.

The functions of the components of in the information processing system will be described hereinafter.

The information processing apparatus 1 is a management apparatus owned by an electric utility for controlling power supplied to the devices 3 using DR, and may be, for example, a server. The information processing apparatus 1 includes an initial setting unit 5, an input device 6, a storage unit 7, an operation state monitoring unit 8, a power state control unit 9, an operation information obtaining unit 10, a power information obtaining unit 11, a power calculation unit 12, and an estimation evaluation unit 13.

The initial setting unit 5 receives, through the input device 6, initial setting information including identification information for identifying the plurality of devices 3 to be controlled and timings (obtaining timings) at which operation information, which is information regarding operation states received by the operation state monitoring unit 8 from the devices 3, is obtained.

The input device 6 is, for example, a keyboard, a mouse, or the like. The initial setting unit 5 stores the initial setting information received through the input device 6 in the storage unit 7. The timings at which the operation information regarding the devices 3 is obtained are, for example, times at which the information is obtained or a time at which the information is obtained for the first time and time intervals at which the information is obtained. The time intervals are, for example, 5 to 15 minutes.

The storage unit 7 is used as a database (DB) for storing various pieces of information. The storage unit 7 may store the information for identifying the devices 3 to be controlled received by the initial setting unit 5 through the input device 6 and the operation information received by the operation state monitoring unit 8 from the devices 3.

The storage unit 7 may store operation information regarding the devices 3 obtained by the operation information obtaining unit 10 and total power information, which is information regarding total power consumption indicating the total value of power in each power system consumed by the devices 3 and the devices 4 while associating the operation information and the total power information with each other, or may store information regarding power consumption calculated by the power calculation unit 12.

The storage unit 7 is a read-only memory (ROM), a semiconductor memory such as a flash memory, or a storage device such as a hard disk drive (HDD). A plurality of storage units 7 may be included, or only a single storage unit 7 may be included.

The operation state monitoring unit 8 monitors the operation states of the devices 3. More specifically, the operation state monitoring unit 8 obtains information indicating a change in the power state of each device 3 from on to off or off to on from each device 3.

The power state control unit 9 controls the on/off states of batteries included in the devices 3 based on the operation information regarding the devices 3 obtained by the operation state monitoring unit 8. More specifically, when it has been detected that there is a device among the plurality of devices 3 whose power state has changed from on to off, the power state control unit 9 performs control such that the battery of the device whose power state has changed from on to off is not charged. On the other hand, when it has been detected that there is a device whose power state has changed from off to on, the power state control unit 9 performs control such that the battery of the device whose power state has changed from off to on is charged. Details of a control method will be described later.

The operation information obtaining unit 10 obtains, as operation information, for example, information in which information regarding the power state of each device and information regarding the state of power reception (power receiving state) of each device are associated with each other. Here, the information regarding the power state of each device is, for example, information indicating whether the power state of each device is on, off, or standby. The information regarding the power receiving state of each device is, for example, information indicating whether each device is receiving power from an alternating current (AC) power supply but the battery is not being charged, each device is receiving power from the AC power supply and the battery is being charged, or each device is not receiving power from the AC power supply and the power of the battery is being consumed (or discharged).

In the following description, a power receiving state in which power is being received from an AC power supply but charging is not being performed will be referred to as "AC", a power receiving state in which power is being received from an AC power supply and a battery is being charged will be referred to as "AC + charging", and a power receiving state in which power is not being received from an AC power supply and a battery is not being charged, and therefore a device 3 is being driven by the battery will be referred to as "battery".

For example, an operation state in which power is being received from an AC power supply but charging is not being performed and power is turned on will be referred to as "AC/ON". An operation state in which power is being received from an AC power supply but charging is not being performed and power is turned off will be referred to as "AC/OFF". An operation state in which power is being received from an AC power supply but charging is not being performed and power is standing by will be referred to as "AC/standby".

An operation state in which power is being received from an AC power supply, a battery is being charged, and power is turned on will be referred to as "AC + charging/ON". An operation state in which power is being received from an AC power supply, a battery is being charged, and power is turned off will be referred to as "AC + charging/OFF". An operation state in which power is being received, a battery is being charged, and power is standing by will be referred to as "AC + charging/standby".

The power information obtaining unit 11 obtains the total power information from the distribution switchboard 2, and stores the obtained total power information in the storage unit 7.

The power calculation unit 12 calculates the power consumption of the devices 3 based on the total power information obtained by the power information obtaining unit 11 and the operation information obtained by the operation information obtaining unit 10, and stores the calculated value of power consumption in the storage unit 7. Here, a standby state refers to a state in which an AC power supply or a battery of a device is supplying power to a memory but power is not being supplied to other components of the device.

The estimation evaluation unit 13 calculates the accuracy of the values of estimated power consumption of the devices 3 calculated by the power calculation unit 12, and evaluates whether or not the accuracy satisfies a certain condition. A method for evaluating the accuracy will be described later.

The initial setting unit 5, the operation state monitoring unit 8, the power state control unit 9, the operation information obtaining unit 10, the power information obtaining unit 11, the power calculation unit 12, and the estimation evaluation unit 13 may be realized by, for example, a processor such as a central processing unit (CPU). More specifically, for example, these components may be realized by reading an information processing program stored in a storage medium such as a semiconductor memory or an HDD into a processor such as a CPU and executing processes of the information processing program.

The distribution switchboard 2 is an electricity meter having a communication function, and may be, for example, a smart meter. The distribution switchboard 2 may communicate with the information processing apparatus 1 through an input/output interface (IF) 14 and control the power consumption of the devices 3. The devices 3 are devices owned by a customer whose power consumption is to be controlled, and include batteries charged by at least part of power supplied from an AC power supply. The devices 3 are, for example, information processing terminals such personal computers (PCs). In FIG. 1, devices 3a, 3b, 3c, and 3d are electrically coupled to the distribution switchboard 2 as an example of the devices 3.

The devices 3 each include a power control client 15. The power control clients 15 are input/output IFs for the devices 3 used to communicate with the information processing apparatus 1. In FIG. 1, the devices 3a, 3b, 3c, and 3d include power control clients 15a, 15b, 15c, and 15d, respectively, as an example of the power control clients 15. The power control clients 15 transmit operation information to the operation state monitoring unit 8 or the operation information obtaining unit 10 of the management server 1, and controls the on/off states of the devices 3 based on control signals received from the power state control unit 9 of the information processing apparatus 1.

The devices 4 are devices owned by the customer whose power consumption is not to be controlled, and are, for example, information processing apparatuses such as a server and a printer. In FIG. 1, devices 4a and 4b are electrically coupled to the distribution switchboard 2 as an example of the devices 4.

Next, the operation of the information processing system according to the embodiment will be described.

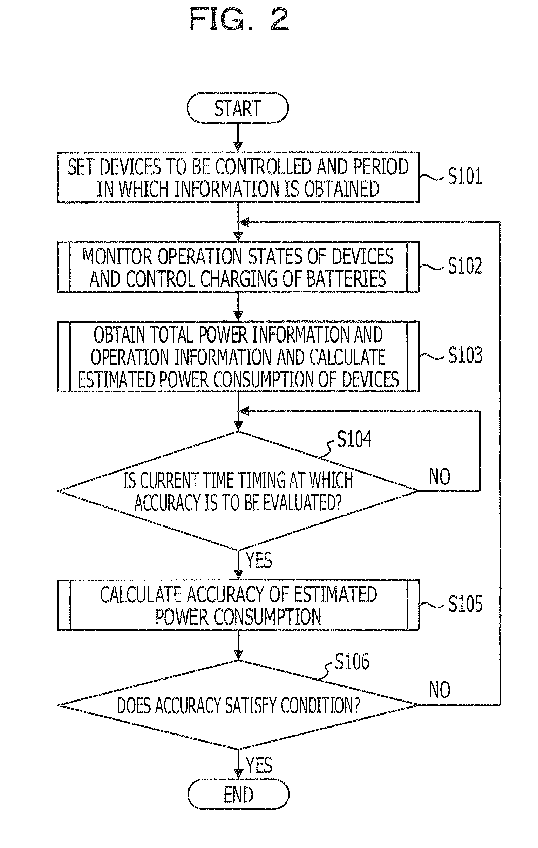

FIG. 2 is a flowchart illustrating an example of a process executed by the information processing apparatus 1 according to the embodiment.

First, the initial setting unit 5 sets devices to be controlled and a period in which the operation information is obtained (S101). The initial setting unit 5 stores the identification information regarding the devices 3 received through the storage unit 7 and the information regarding the timings at which the operation information is obtained from the operation state monitoring unit 8 in the storage unit 7. By storing the obtained information in the storage unit 7, the processing in S101 is completed.

Next, the operation state monitoring unit 8 monitors the operation states of the devices 3, and the power state control unit 9 controls the on/off states of charging of the batteries of the devices 3 based on the operation information regarding the devices 3 obtained by the operation state monitoring unit 8 (S102).

Now, a relationship between a method for controlling the on/off states of charging of the batteries of the devices 3 and a multiple regression analysis used as a method for estimating the power consumption of the devices 3 according to the embodiment will be described.

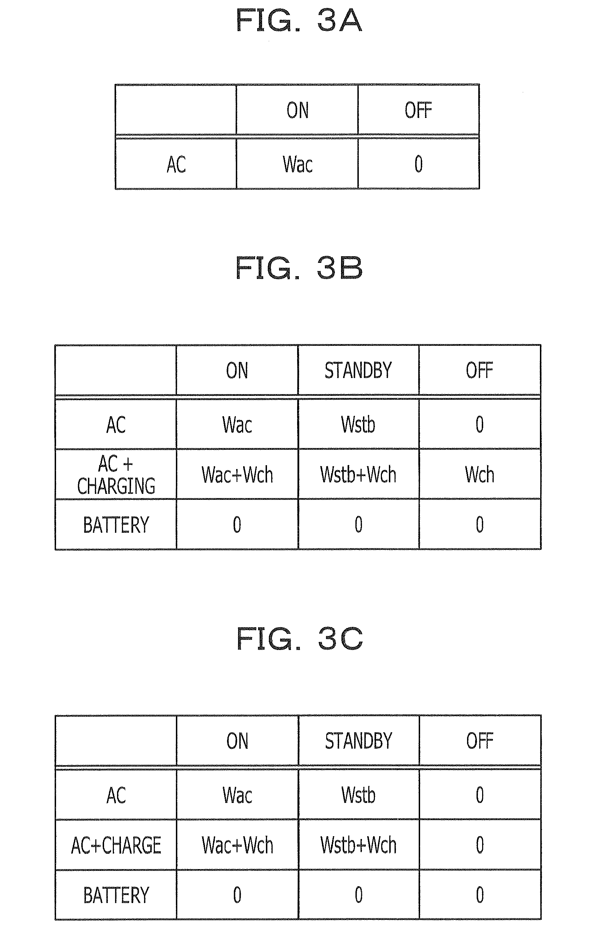

FIGs. 3A to 3C illustrate examples of a table indicating the power consumption of a device using the operation state and the power receiving state of the device as parameters.

FIG. 3A illustrates an example of a table indicating the power consumption of a device at a time when the device does not have a charge function and a standby function. As illustrated in FIG. 3A, the power state of the device is one of two states (on or off), and the power receiving state of the device is only "AC". Only in "AC/ON", the device consumes Wac as power. On the other hand, since power is not supplied to the device in "AC/OFF", the power consumption of the device is zero. Therefore, an explanatory variable to be estimated is only one (Wac). That is, if once Wac becomes known, the power consumption of the device in each operation state may be estimated.

FIG. 3B illustrates an example of a table indicating the power consumption of a device that has the charge function and the standby function and that may charge a battery not only when the device is turned on or standing by but also when the device is turned off. As illustrated in FIG. 3B, when the power receiving state of the device is "AC + charging", the device may be in one of the three operation states, namely on, standby, and off.

In "AC/ON", the device consumes a power of Wac since power is supplied from an AC power supply. In "AC/standby", the device consumes a power of Wstb since power is supplied from the AC power supply.

In "AC + charging/ON", the device consumes a power of Wac + Wch since power Wch for charging the battery is supplied in addition to the power from the AC power supply. In "AC + charging/standby", the device consumes a power of Wstb + Wch since the power Wch is supplied in addition to the power supplied from the AC power supply. On the other hand, in "AC + charging/OFF", the device consumes only a power of Wch since the power Wac is not supplied.

When the device operates using only the battery, the power consumption of the device is zero regardless of the operation state since power is not supplied from the AC power supply.

When the power receiving state of the device is "AC + charging", the power Wch is included in the value of power consumption regardless of the operation state of the device. Therefore, the value of power consumption in each operation state has a correlation. When such a correlation exists, there might be a problem in that it is difficult to accurately calculate and estimate the power consumption of the device because, when a multiple regression analysis for estimating the power consumption of the device has been performed, a result of the analysis exhibits an abnormal value (this is called a "problem of multicollinearity").

On the other hand, according to the embodiment, when the power consumption of the devices are to be estimated, devices coupled to the distribution switchboard 2 whose power states have changed from on to off are controlled such that their respective batteries are not charged. FIG. 3C illustrates an example of a table indicating power consumption of a device at a time when control has been performed such that a battery is not charged when the power state of the device is off. As illustrated in FIG. 3C, by performing control such that the battery is not charged when the device is turned off in a state in which the power receiving state is the "AC + charging" state, power may be consumed in four states, namely "AC/ON", "AC/standby", "AC + charging/ON", and "AC + charging/standby".

Therefore, by calculating a difference (Wac + Wch) - Wac between the power consumption Wac in "AC/ON" and the power consumption Wac + Wch in "AC + charging/ON", Wch may be obtained. Alternatively, by calculating a difference (Wstb + Wch) - Wstb between the power consumption Wstb in "AC/standby" and the power consumption Wstb + Wch in "AC + charging/standby", Wch may be obtained.

As described above, by performing control such that a battery of a device is not charged when the power state of the device has changed from on to off, the number of types of operation states of the device when the power receiving state of the device is "AC + charging" decreases from three (on, standby, and off) to two (on and standby), and accordingly the number of explanatory variables may be decreased by 1. Thus, the correlation between the operation states of the device may be reduced, which makes it possible to accurately estimate power consumption while avoiding occurrence of the problem of multicollinearity.

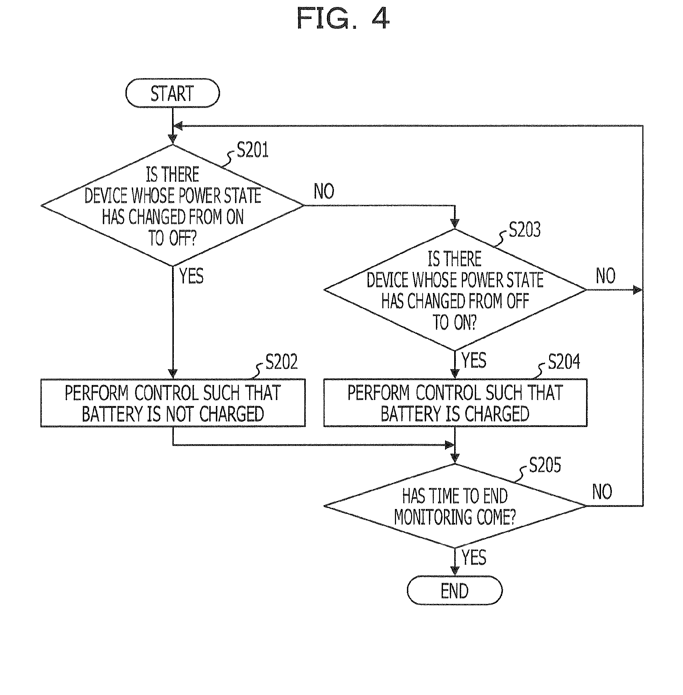

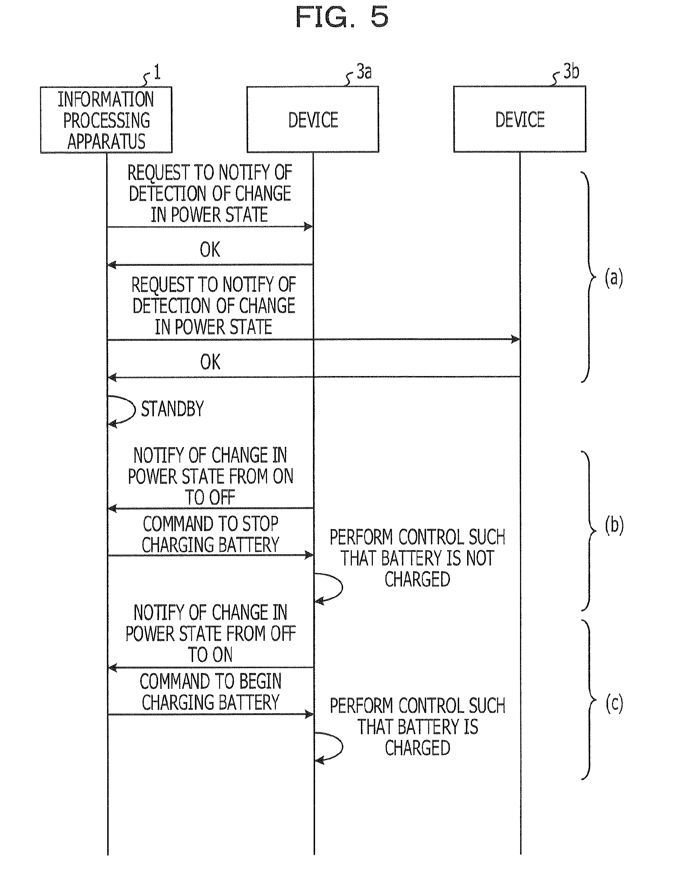

FIG. 4 is a flowchart illustrating an example of the method for controlling charging of the batteries of the devices 3. FIG. 5 is a sequence diagram relating to the example of the method for controlling charging of the batteries of the devices 3.

First, as illustrated in part (a) of FIG. 5, the operation state monitoring unit 8 of the information processing apparatus 1 requests the power control clients 15 of the devices 3 to notify the operation state monitoring unit 8 of detection of changes in the operation states of the devices 3. If the power control clients 15 of the devices 3 are to accept the request, the power control clients 15 transmit signals indicating the acceptance to the operation state monitoring unit 8. In FIG. 4, the power control client 15a of the device 3a and the power control client 15b of the device 3b are illustrated as an example of the power control clients 15 of the devices 3.

Next, as illustrated in FIG. 4, the operation state monitoring unit 8 determines whether or not there is any device 3 whose power state has changed from on to off while monitoring the operation states of the devices 3 through a thread process and signals received from the devices 3 (S201). If the operation state monitoring unit 8 determines that there is any device 3 whose power state has changed from on to off (YES in S201), the process proceeds to S202, in which, as illustrated in part (b) of FIG. 5, the power state control unit 9 of the information processing apparatus 1 transmits a command to stop charging the battery to the device 3a, whose power state is assumed here to have changed from on to off, so that power is no longer supplied to the battery (charging is no longer performed). On the other hand, if the operation state monitoring unit 8 determines that there is no device 3 whose power state has changed from on to off (NO in S201), the process proceeds to S203, in which the operation state monitoring unit 8 determines whether or not there is any device 3 whose power state has changed from off to on.

If the operation state monitoring unit 8 determines that there is any device 3 whose power state has changed from off to on (YES in S203), the power state control unit 9 of the information processing apparatus 1 transmits, as illustrated in part (c) of FIG. 5, a command to begin to charge the battery to the device 3a, whose power state is assumed here to have changed from off to on, so that the battery is charged (S204). On the other hand, if the operation state monitoring unit 8 determines that there is no device 3 whose power state has changed from off to on (NO in S203), the process returns to S201.

After executing the processing in S204, the operation state monitoring unit 8 determines whether or not a time to end the monitoring has come (S205). The operation state monitoring unit 8 may make the determination as to the time to end the monitoring based on, for example, the information regarding the period in which the information is obtained stored in the storage unit 7 by the initial setting unit 5 in S101, that is, more specifically, information regarding a time at which the operation state monitoring unit 8 obtains the operation information for the last time. Alternatively, the determination may be made based on whether or not the operation state monitoring unit 8 has received a signal for stopping the monitoring of the operation states from the power calculation unit 12, the estimation evaluation unit 13, or the like.

If the operation state monitoring unit 8 determines that the time to end the monitoring has come (YES in S205), the operation state monitoring unit 8 ends the monitoring. After the monitoring is ended, a battery may be charged when the power state of a device has changed from on to off. On the other hand, if the operation state monitoring unit 8 determines that the time to end the monitoring has not yet come (NO in S205), the process proceeds to S201.

According to FIGs. 4 and 5, whether or not there is any device 3 whose power state has changed from on to off is determined, and if there is no device 3 whose power state has changed from on to off, the process for determining whether or not there is any device 3 whose power state has changed from off to on is performed. That is, since the process for determining whether or not there is any device 3 whose power state has changed from on to off is performed first, a time lag between a change in the power state from on to off and the beginning of the control for cancelling charging of the battery may be reduced. By reducing the time lag, the accuracy of estimation of the power consumption of each device may be improved because a time lag between the change in the power state from on to off and the end of the charging of the battery is reduced. When the time lag between the change in the power state from on to off and the end of the charging of the battery is negligible, the processing in S201 may be executed after the processing in S203 is executed.

In FIG. 2, after the processing in S102 is executed, the process proceeds to S103, in which the power information obtaining unit 11 obtains the total power information indicating the total value of the power consumption of the devices coupled to the distribution switchboard 2. On the other hand, the operation information obtaining unit 10 obtains the operation information regarding the devices. Next, the power calculation unit 12 calculates the power consumption of each device 3 based on the obtained total power information and the operation information.

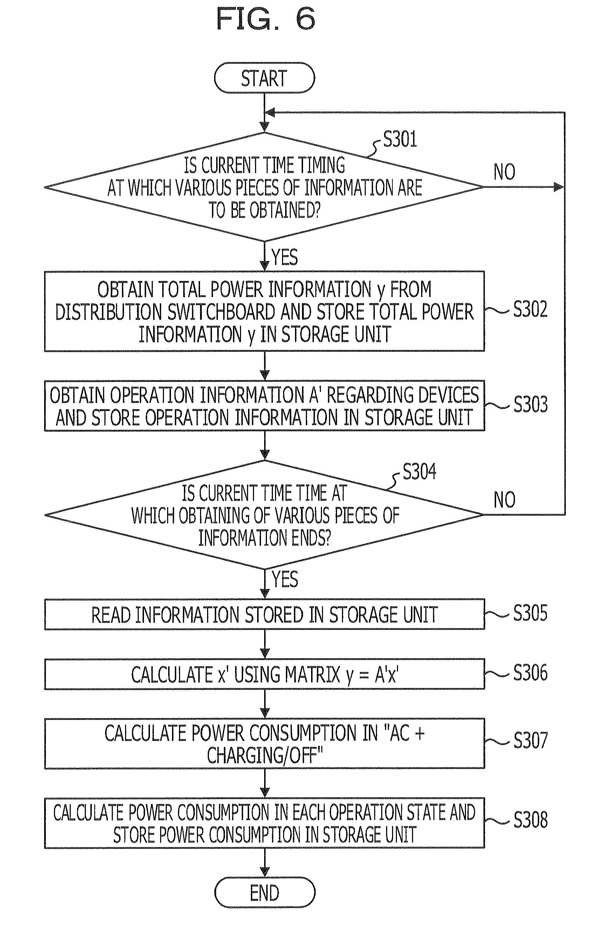

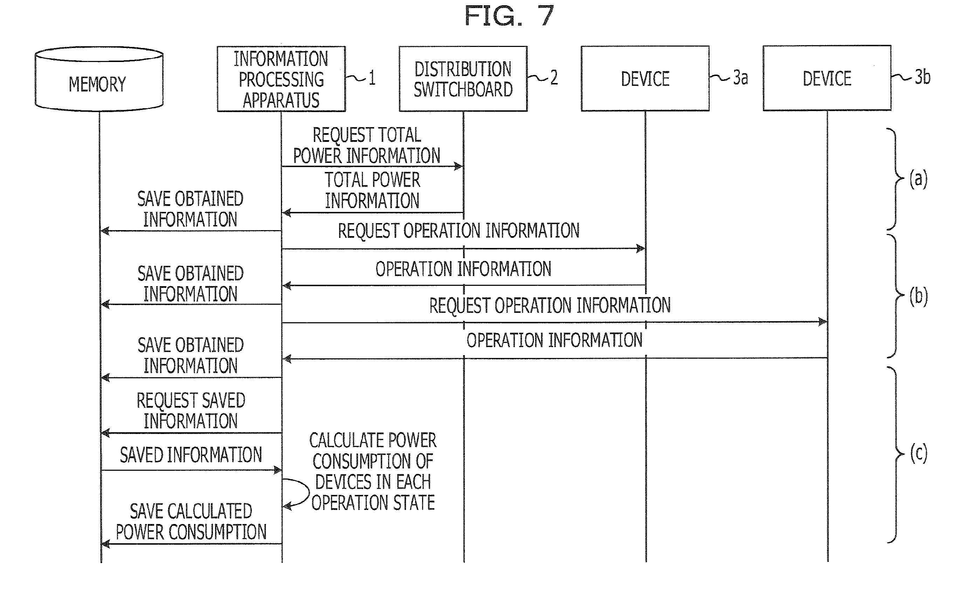

Here, a method for calculating the power consumption of each device used in S103 will be described with reference to FIGs. 6 and 7.

FIG. 6 is a flowchart illustrating an example of the method for calculating the power consumption of each device according to the embodiment. FIG. 7 is a sequence diagram relating to the example of the method for calculating the power consumption of each device according to the embodiment.

First, as illustrated in FIG. 6, the power calculation unit 12 determines, based on the information regarding the obtaining timings stored in the storage unit 7, whether or not the current time is one of the timings at which various pieces of information are to be obtained (S301). If the power calculation unit 12 determines that the current time is not one of the timings at which various pieces of information are to be obtained (NO in S301), the process enters a standby state, and S301 is executed again.

On the other hand, if the power calculation unit 12 determines that the current time is one of the obtaining timings (YES in S301), the power information obtaining unit 11 transmits, as illustrated in part (a) of FIG. 7, a signal for requesting total power information y indicating the total value of the power consumption of the devices coupled to the distribution switchboard 2. Upon receiving the signal for requesting the total power information y, the distribution switchboard 2 transmits the total power information y to the power information obtaining unit 11. Upon receiving and obtaining the total power information y, the power information obtaining unit 11 stores the obtained information in the storage unit 7 (S302).

In S302, the power information obtaining unit 11 sequentially obtains the total power information y at the obtaining timings based on the information regarding the obtaining timings stored in the storage unit 7. Time-series information regarding the total values of power consumption sequentially obtained at the obtaining timings may be expressed by a matrix y.

Expression (1):

$$y = \begin{bmatrix} y_1 \\ y_2 \\ y_3 \\ y_4 \\ \vdots \\ y_t \end{bmatrix}$$

Rows of the matrix y represent the total power values at the obtaining timings. The larger the row number, the more recent the time at which data regarding the total power value is obtained. That is, in the expression (1), $\gamma_1$ is the total value of power consumption obtained for the first time, and $\gamma_t$ is the total value of power consumption obtained for the last time. Elements of the matrix y are used as response variables in the multiple regression analysis, which will be described later.

Next, the operation information obtaining unit 10 obtains operation information A' regarding the devices 3, and stores the operation information A' in the storage unit 7. The operation information obtaining unit 10 requests the operation information A' from the devices 3 (S303). More specifically, as illustrated in part (b) of FIG. 7, the operation information obtaining unit 10 transmits a signal for requesting the operation information A' to each of the devices 3 at the obtaining timings based on the information regarding the obtaining timings stored in the storage unit 7. Upon receiving the signal for requesting the operation information A', each of the devices 3 obtains the operation information A' thereof, and transmits the obtained operation information A' to the operation information obtaining unit 10. Upon receiving the operation information A', the operation information obtaining unit 10 stores the received information in the storage unit 7.

Time-series data regarding the operation information A' obtained at the obtaining timings may be expressed by a matrix A'.

Expression (2):

$$A' = \begin{bmatrix} a_{1,1} & a_{1,2} & a_{1,3} & \cdots & a_{1,M} & a_{1,Z} \\ a_{2,1} & a_{2,2} & a_{2,3} & \cdots & a_{2,M} & a_{2,Z} \\ a_{3,1} & a_{3,2} & a_{3,3} & \cdots & a_{3,M} & a_{3,Z} \\ a_{4,1} & a_{4,2} & a_{4,3} & \cdots & a_{4,M} & a_{4,Z} \\ \vdots & \vdots & \vdots & \cdots & \vdots & \vdots \\ a_{t,1} & a_{t,2} & a_{t,3} & \cdots & a_t & a_{t,Z} \end{bmatrix}$$

Elements of the matrix A' are used as response variables in the multiple regression analysis, which will be described later.

Here, columns of the matrix A' represent differences in the operation state between the devices 3 and 4. For example, the first column ($a_{1,1}$ to $a_{t,1}$) indicates the device 3a in the "AC/ON" state, the second column indicates the device 3a in the "AC/standby" state, the third column indicates the device 3a in the "AC + charging/ON" state, and the rightmost column indicates that one of the devices 4 is operating. A value substituted for each element of the matrix A' indicates whether or not a device 3 or 4 is in the corresponding operation state in time series. That is, "1" is substituted when the corresponding operation state has been established, and "0" is substituted when the corresponding operation state has not been established. The total power information y and the operation information A' regarding each device are obtained at the same obtaining timings. Therefore, the matrix y and the matrix A' have corresponding relationships between the same row numbers thereof.

Next, the power calculation unit 12 determines, based on information indicating an obtaining end time stored in the storage unit 7, whether or not the current time is a time at which the obtaining of various pieces of information ends (S304). If the power calculation unit 12 determines that the current time is not a time at which the obtaining of various pieces of information ends (NO in S304), the process returns to S301. On the other hand, if the power calculation unit 12 determines that the current time is a time at which the obtaining of various pieces of information ends (YES in S304), the process proceeds to S305.

In S305, the power calculation unit 12 reads the total power information y and the operation information A' stored in S302 and S303, respectively, from the storage unit 7.

Next, the power calculation unit 12 calculates power consumption x of the devices 3 based on the total power information y and the operation information A' that have been read (S306).

First, the power consumption of the devices 3 to be estimated through the multiple regression analysis according to the embodiment may be expressed by a matrix x' in the following expression (3).

$$\text{Expression (3):}$$

$$x' = \begin{bmatrix} x_1 \\ x_2 \\ x_3 \\ \dots \\ x_M \\ Z \end{bmatrix}$$

Here, $X_1$, $X_2$, ..., and $X_M$ represent the power consumption of the devices 3, and Z represents the total power consumption of the devices 4.

Based on the expressions (1) to (3), the relationships between the total power consumption, the operation states, and the power consumption of the devices may be expressed by representing a multiple regression equation using the matrix y = A' × x', that is, the following expression (4).

Expression (4):

$$
\begin{bmatrix} y_1 \\ y_2 \\ y_3 \\ y_4 \\ \vdots \\ y_t \end{bmatrix}
=
\begin{bmatrix}
a_{1,1} & a_{1,2} & a_{1,3} & \cdots & a_{1,M} & a_{1,Z} \\
a_{2,1} & a_{2,2} & a_{2,3} & \cdots & a_{2,M} & a_{2,Z} \\
a_{3,1} & a_{3,2} & a_{3,3} & \cdots & a_{3,M} & a_{3,Z} \\
a_{4,1} & a_{4,2} & a_{4,3} & \cdots & a_{4,M} & a_{4,Z} \\
\vdots & \vdots & \vdots & \cdots & \vdots & \vdots \\
a_{t,1} & a_{t,2} & a_{t,3} & \cdots & a_{t} & a_{t,Z}
\end{bmatrix}
\begin{bmatrix} x_1 \\ x_2 \\ x_3 \\ x_4 \\ \vdots \\ x_M \\ x_Z \end{bmatrix}
$$

In S306 following S305, a multiple regression analysis using a method of least squares is performed, and x' that minimizes the sum of squares of the rows of (y - A' $\times$ x') is calculated from the expression (4).

Now, a method for calculating the matrix x' will be described using an example of the data regarding the total power information y and the operation information A'.

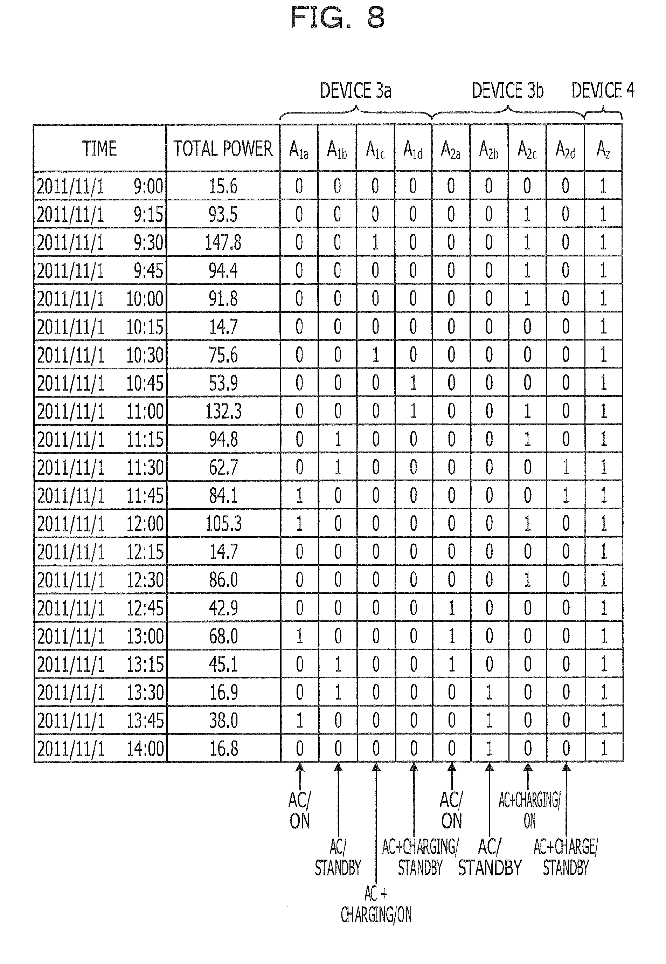

FIG. 8 is a diagram illustrating an example of data regarding the total power consumption and the operation state of the devices at the obtaining timings. FIG. 8 illustrates data regarding the total power consumption and the operation states of the devices at the obtaining timings at a time when the devices 3a and 3b have been determined as the devices to be controlled and the devices 4a and 4b have been determined as the devices not to be controlled among the devices illustrated in FIG. 1. A first obtaining timing comes at 9:00 on November 1, 2011, and the intervals of the obtaining timings are 15 minutes. The number of pieces of data obtained is 21 for each parameter indicating the operation information. The unit of the total power consumption is watt (W).

$A_{1a}$, $A_{1b}$, $A_{1c}$, and $A_{1d}$ are parameters indicating the operation information regarding the device 3a. "1" is indicated in $A_{1a}$ when the device 3a is in the "AC/ON" state, and "0" is indicated in $A_{1a}$ when the device 3a is not in the "AC/ON" state. "1" is indicated in $A_{1b}$ when the device 3a is in the "AC/standby" state, and "0" is indicated in $A_{1b}$ when the device 3a is not in the "AC/standby" state. "1" is indicated in $A_{1c}$ when the device 3a is in the "AC + charging/ON" state, and "0" is indicated in $A_{1c}$ when the device 3a is not in the "AC + charging/ON" state. "1" is indicated in Aid when the device 3a is in the "AC + charging/standby" state, and "0" is indicated in $A_{1d}$ when the device 3a is not in the "AC + charging/standby" state.

$A_{2a}$, $A_{2b}$, $A_{2c}$, and $A_{2d}$ are parameters indicating the operation information regarding the device 3b. "1" is indicated in $A_{2a}$ when the device 3b is in the "AC/ON" state, and "0" is indicated in $A_{2a}$ when the device 3b is not in the "AC/ON" state. "1" is indicated in $A_{2b}$ when the device 3b is in the "AC/standby" state, and "0" is indicated in $A_{2b}$ when the device 3b is not in the "AC/standby" state. "1" is indicated in $A_{2c}$ when the device 3b is in the "AC + charging/ON" state, and "0" is indicated in $A_{2c}$ when the device 3b is not in the "AC + charging/ON" state. "1" is indicated in $A_{2d}$ when the device 3b is in the "AC + charging/standby" state, and "0" is indicated in $A_{2d}$ when the device 3b is not in the "AC + charging/standby" state.

$A_z$ represents the operation states of the devices 4a and 4b. The devices 4a and 4b are devices not to be controlled using DR, and accordingly do not include power control clients. In the example illustrated in FIG. 8, it is assumed that both the devices 4a and 4b are operating, and therefore "1" is substituted for $A_z$ at all the obtaining timings.

"1" is indicated in $A_z$ when either the device 4a or the device 4b is turned on, and "0" is indicated in $A_z$ when the devices 4a and 4b are turned off.

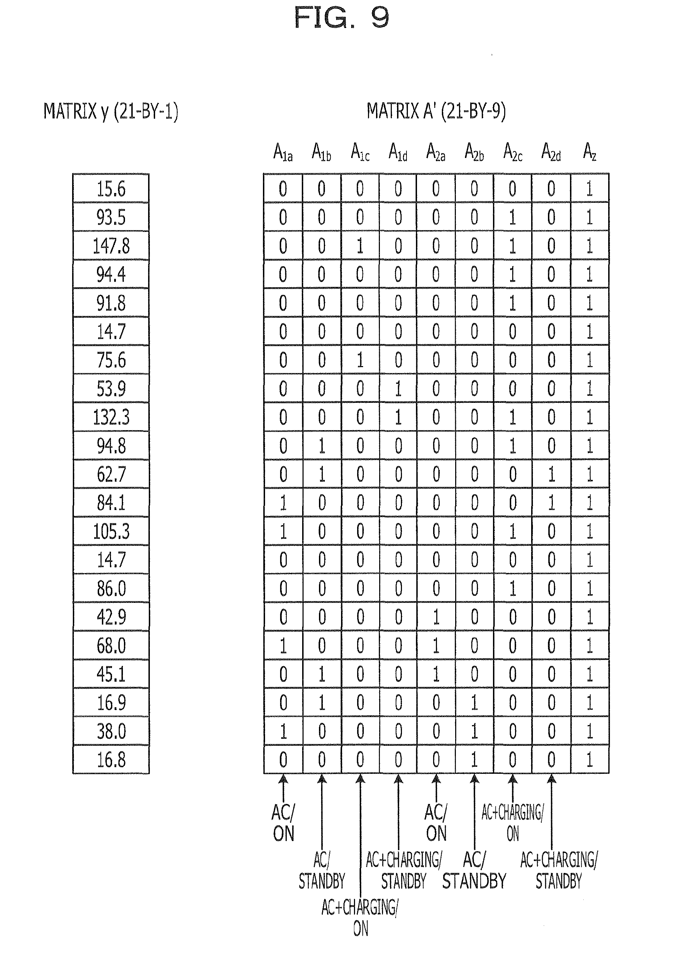

FIG. 9 is a diagram illustrating an example of a matrix y representing the total power information and a matrix A' representing the operation information obtained from the data illustrated in FIG. 8. As illustrated in FIG. 9, a 21-by-1 matrix y and a 21-by-9 matrix A' may be obtained from the data illustrated in FIG. 8. In a multiple regression analysis, the expression y = A' $\times$ X' may be expressed in a form in which a matrix E representing errors is included.

Expression (5):

$$|E|^2 = e_1^{\,2} + e_2^{\,2} + e_3^{\,2} + \cdots + e_M^{\,2}$$

Expression (6):

$$X'' = (A'^T \times A')^{-1} \times (A'^T \times y)$$

That is, by calculating a transposed matrix $A'^T$ of the matrix $A'$ and an inverse matrix $(A'^T \times A')^{-1}$ of a matrix $(A'^T \times A')$ and substituting the calculated transposed matrix $A'^T$, the inverse matrix $(A'^T \times A')^{-1}$, and y for the expression (6), X" may be calculated.

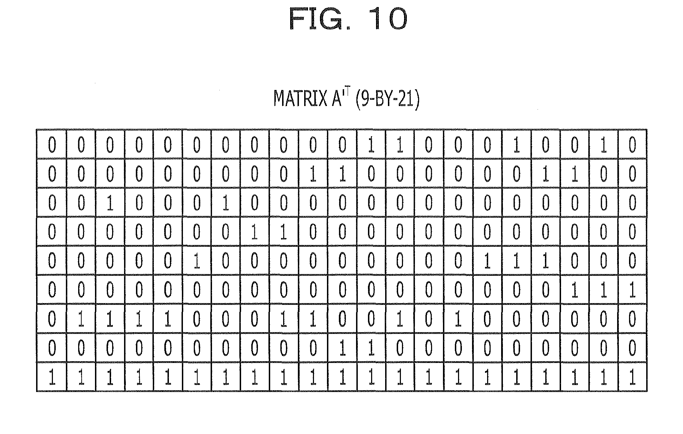

FIG. 10 illustrates the transposed matrix $A'^T$ of the matrix $A'$ illustrated in FIG. 9. As illustrated in FIG. 10, the 9-by-21 transposed matrix $A'^T$ may be obtained from the matrix $A'$.

Next, $A'^T \times A'$ is calculated from the matrix $A'$ illustrated in FIG. 9 and the transposed matrix $A'^T$ illustrated in FIG. 10.

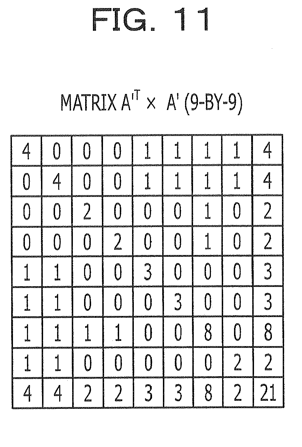

FIG. 11 is a diagram illustrating a result of the calculation of the matrix $(A'^T \times A')$. As illustrated in FIG. 11, the 9-by-9 matrix $(A'^T \times A')$ may be calculated from the matrix $A'$ illustrated in FIG. 9 and the transposed matrix $A'^T$ illustrated in FIG. 10.

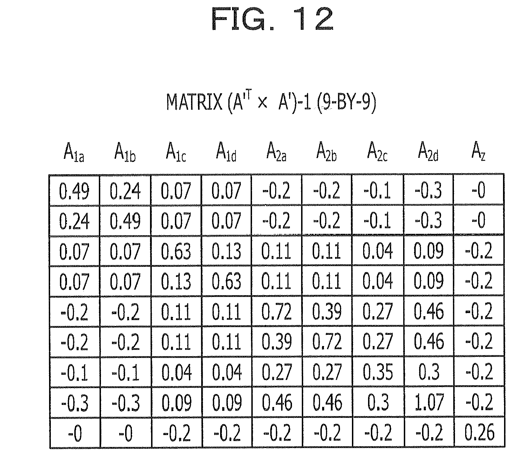

Next, the inverse matrix $(A'^T \times A')^{-1}$ is calculated from the matrix $(A'^T \times A')$ illustrated in FIG. 11. FIG. 12 is a diagram illustrating a result of the calculation of the inverse matrix $(A'^T \times A')^{-1}$ of the matrix $(A'^T \times A')$. As illustrated in FIG. 12, a 9-by-9 matrix may be obtained as the inverse matrix $(A'^T \times A')^{-1}$ of the matrix $(A'^T \times A')$.

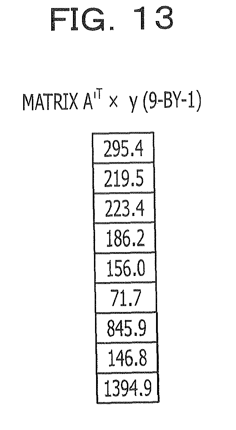

Next, a matrix $(A'^T \times y)$ is calculated from the matrix y illustrated in FIG. 9 and the matrix $A'^T$ illustrated in FIG. 10. FIG. 13 is a diagram illustrating a result of the calculation of the matrix $(A'^T \times y)$. As illustrated in FIG. 13, a 9-by-1 matrix may be obtained as the matrix $(A'^T \times y)$.

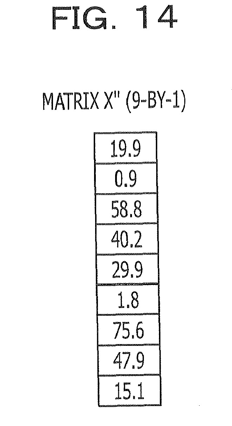

Next, by substituting the inverse matrix $(A'^T \times A')^{-1}$ illustrated in FIG. 12 and the matrix $(A'^T \times y)$ illustrated in FIG. 13 for the expression (5), the matrix X" may be calculated. FIG. 14 is a diagram illustrating a result of the calculation of the matrix X". As illustrated in FIG. 14, a 9-by-1 matrix may be obtained as the matrix X". Each element of the matrix X" represents the estimated power consumption in each operation state.

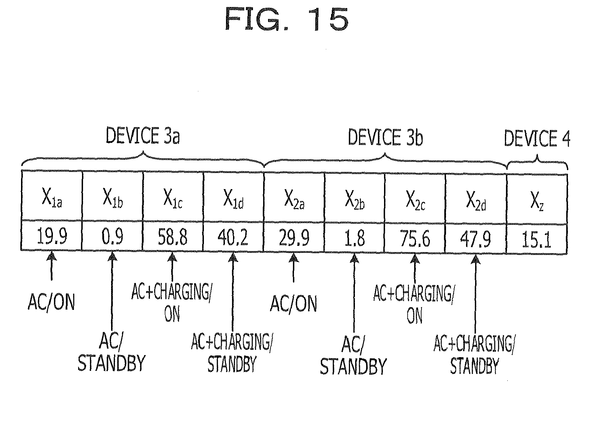

FIG. 15 is a diagram illustrating the estimated power consumption of the devices obtained from FIG. 14. Each value illustrated in FIG. 15 is obtained by expressing each element of the matrix X" illustrated in FIG. 14 using three significant figures.

Referring to FIG. 3C, $X_{1a}$ and $X_{2a}$ correspond to the power consumption Wac in "AC/ON". $X_{1b}$ and $X_{2b}$ correspond to the power consumption Wstb in "AC/standby". $X_{1c}$ and $X_{2c}$ correspond to the power consumption Wac + Wch in "AC + charging/ON". $X_{1d}$ and $X_{2d}$ correspond to the power consumption Wstb + Wch in "AC + charging/standby".

Thus, by obtaining the matrix X", the estimated power consumption in the four operation states may be calculated for each device.

Next, in FIG. 6, after the matrix X" is calculated, in S307, the power consumption in "AC + charging/OFF" is calculated (S307). In S302 to S306, the estimated power consumption has been calculated in an operation environment excluding the "AC + charging/OFF" state by performing control such that the batteries of the devices whose power states have changed from on to off are not charged. Now, in S307, the power consumption in the "AC + charging/OFF" state, which has been excluded, is calculated based on the results of the calculation of the estimated power consumption.

Referring to FIG. 3C, the power consumption Wch in the "AC + charging/OFF" state may be calculated, for example, by one of the following methods:

Method (1): A method for calculating an estimated value of Wch by obtaining a difference (Wac + Wch) - Wac between the power consumption Wac in "AC/ON" and the power consumption Wac + Wch in "AC + charging/ON"; and

Method (2): A method for calculating an estimated value of Wch by obtaining a difference (Wstb + Wch) - Wstb between the power consumption Wstb in "AC/standby" and the power consumption Wstb + Wch in "AC + charging/ standby".

The calculated values Wac, Wstb, Wac + Wch, and Wstb + Wch each include an error. As a result, the value of Wch obtained by the method (1) and the value of Wch obtained by the method (2) do not necessarily become the same. Therefore, the power consumption Wch in the "AC + charging/OFF" state may be calculated, for example, by the following method:

Method (3): A method for calculating an estimated value of Wch by obtaining the average of the value Wch obtained by the method (1) and the value Wch obtained by the method (2).

According to this method, a more accurate estimated value may be calculated regardless of how large the error in the value Wch obtained by the method (1) and the error in the value Wch obtained by the method (2).

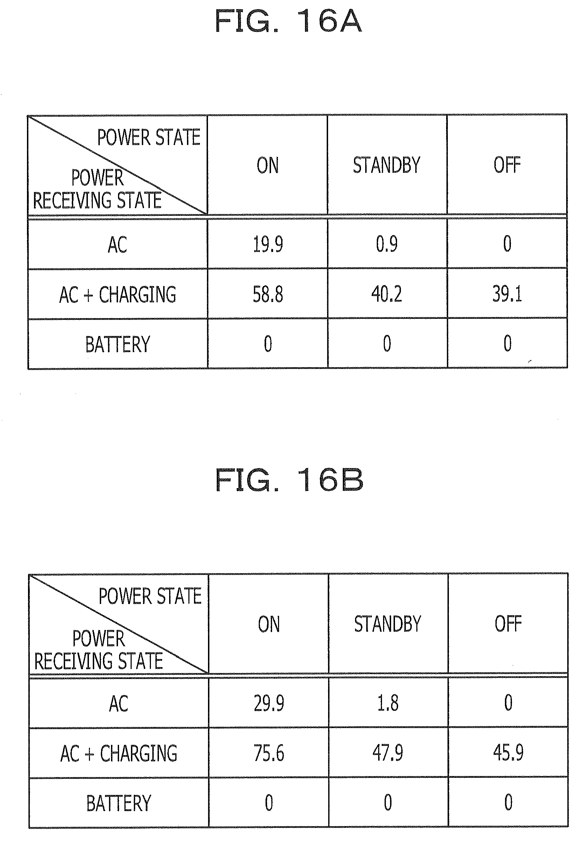

FIGs. 16A and 16B illustrate an example of tables indicating the estimated power consumption of the devices 3a and 3b in each operation state. In FIGs. 16A and 16B, the calculated values have been substituted for the items in the table illustrated in FIG. 3B. FIG. 16A illustrates the estimated power consumption of the device 3a in each operation state, and FIG. 16B illustrates the estimated power consumption of the device 3b in each operation state. The power consumption in the "AC + charging/OFF" state illustrated in FIGs. 16A and 16B has been calculated using the method (3).

In S103 illustrated in FIG. 2, the estimated power consumption of the devices in each operation state may be calculated in the above-described manner.

Next, the operation of the power control client 15 of each device 3 according to the embodiment will be described.

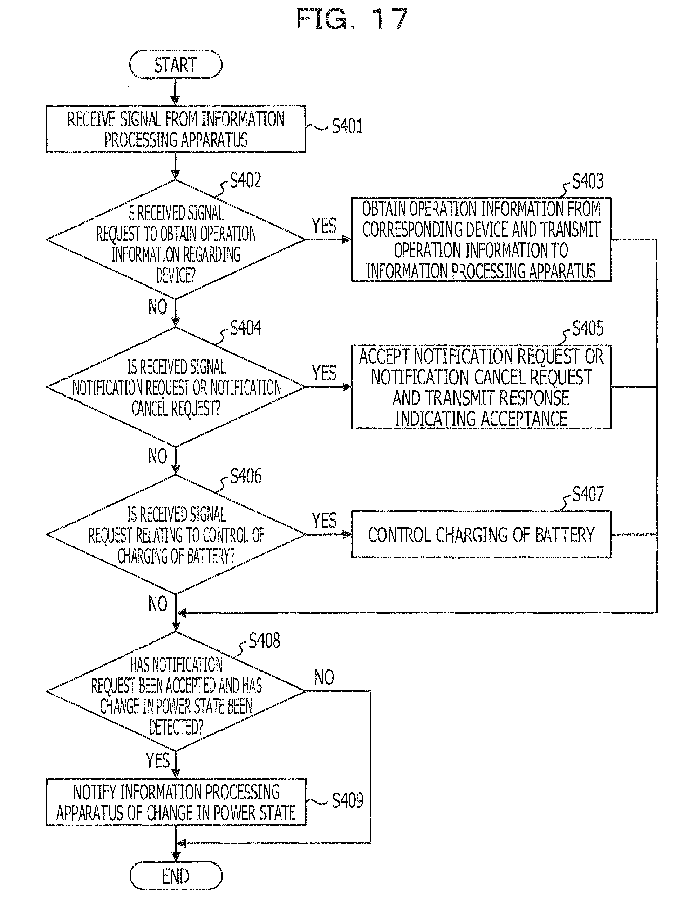

FIG. 17 is a flowchart illustrating an example of a process executed by the power control client of each device according to the embodiment.

First, the power control client 15 receives a request signal from the information processing apparatus 1 (S401).

Next, the power control client 15 determines whether or not the received request signal is a signal indicating a request to obtain the operation information regarding the device transmitted from the operation state monitoring unit 8 (S402). If the power control client 15 determines that the received request signal is a signal indicating a request to obtain the operation information regarding the device (YES in S402), the power control client 15 obtains the operation information from the corresponding device and transmits the operation information to the information processing apparatus 1, and then the process proceeds to S408. On the other hand, if the power control client 15 determines that the received request signal is not a signal indicating a request to obtain the operation information regarding the device (NO in S402), the process proceeds to S404.

In S404, the power control client 15 determines whether or not the received request signal is a request relating to notification at a time when the power state of the device has been changed transmitted from the operation information obtaining unit 10. The request relating to notification at a time when the power state of the device has been changed may be of one of the following two types: a notification request to request notification when it has been detected that the power state of the device has changed from on to off or off to on and a notification cancel request to request cancellation of the notification. In S404, the power control client 15 determines whether or not the received request signal is of one of the foregoing two types.

If the power control client 15 determines that the received request signal is a notification request or a notification cancel request (YES in S404), the power control client 15 transmits a response indicating acceptance of the request (S405), and the process proceeds to S408. On the other hand, if the power control client 15 determines that the received request signal is neither a notification request nor a notification cancel request (NO in S404), the process proceeds to S406.

In S406, the power control client 15 determines whether or not the received request signal is a request relating to control of charging of the battery transmitted from the power state control unit 9. The request relating to control of charging of the battery may be of one of the following two types: a request to perform control such that the battery is not charged and a request to perform control such that the battery is charged. In S406, the power control client 15 determines whether or not the received request signal is of one of the foregoing two types.

If the power control client 15 determines that the received request signal is a request relating to control of charging of the battery (YES in S406), the power control client 15 controls the charging of the battery in accordance with the request signal (S407), and the process proceeds to S408.

In S408, the power control client 15 determines whether or not the notification request has been accepted in S405 and a change in the power state has been detected. A change in the power state may be a change in the power state from on to off or a change in the power state from off to on. In S408, the power control client 15 determines whether the power state has changed in one or the other of the foregoing two ways.

If the power control client 15 determines that the notification request has been accepted and a change in the power state from on to off has been detected (YES in S408), the power control client 15 transmits a signal for notifying the information processing apparatus 1 of the change in the operation state to the information processing apparatus 1 (S409). On the other hand, if the power control client 15 determines that the notification request has not been accepted or a change in the power state from on to off has not been detected (NO in S408), the power control client 15 transmits a signal for notifying the operation state monitoring unit 8 of the change in the operation state to the operation state monitoring unit 8.

Now, in FIG. 2, after executing the processing in S103, the estimation evaluation unit 13 determines whether or not the current time is a timing at which the accuracy of the estimated power consumption is to be evaluated based on the information regarding timings at which the accuracy of the estimated power consumption is to be evaluated stored in the storage unit 7 (S104). Intervals at which the accuracy of the estimated power consumption is to be evaluated are preferably longer than the intervals at which the power consumption of the devices is to be calculated, that is, for example, 2 to 3 hours or every other day.

If the estimation evaluation unit 13 determines that the current time is not a timing at which the accuracy of the estimated power consumption is to be evaluated (NO in S104), the estimation evaluation unit 13 remains in a standby state until a certain period of time elapses, and executes S104 again when the certain period of time has elapsed.

On the other hand, if the estimation evaluation unit 13 determines that the current time is a timing at which the accuracy of the estimated power consumption is to be evaluated (YES in S104), the estimation evaluation unit 13 calculates the accuracy of the estimated power consumption (S105).

As described above, since the estimated power consumption has been calculated using a regression calculation in S103, the calculated values include errors. Therefore, by regularly comparing the values of estimated power consumption with the actual values of power consumption and controlling the errors, the estimation accuracy of the estimated power consumption may be improved.

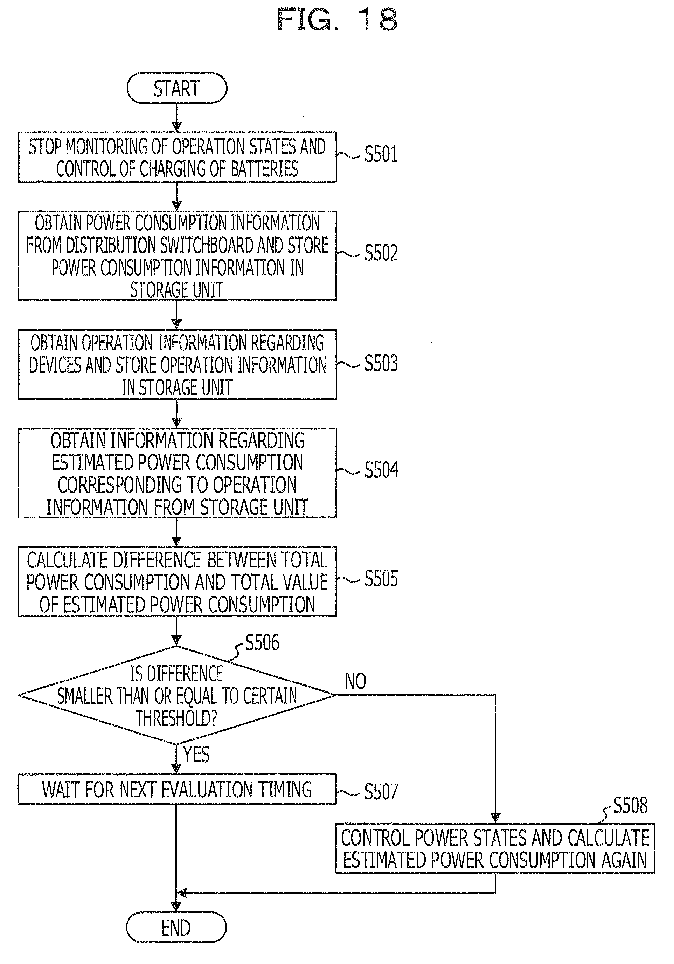

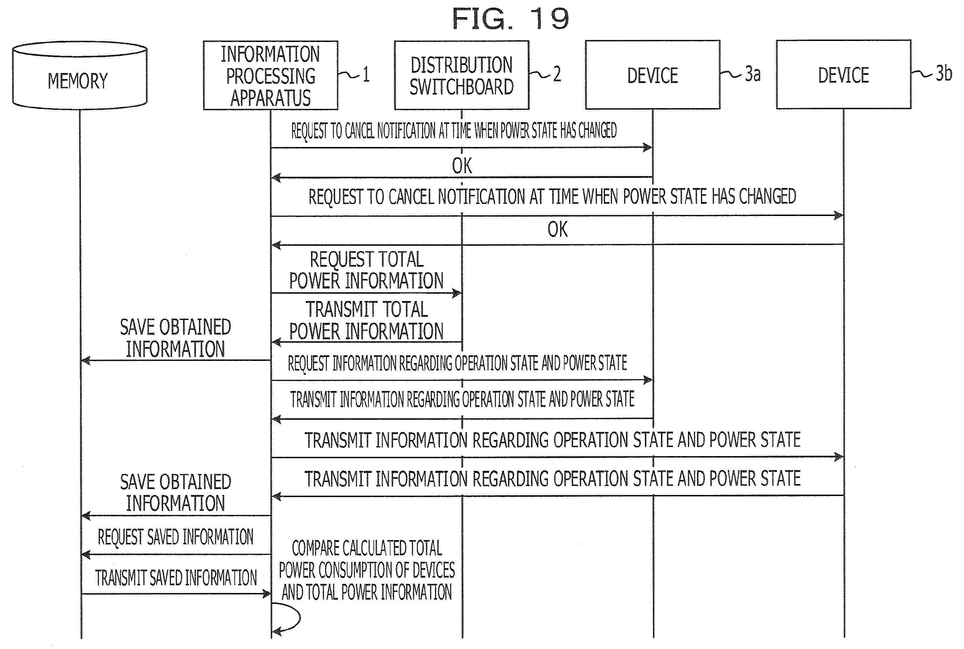

An example of a method for evaluating the accuracy of the estimated power consumption will be described hereinafter with reference to FIGs. 18 and 19.

FIG. 18 is a flowchart illustrating an example of the evaluation of the accuracy of the estimated power consumption according to the embodiment. FIG. 19 is a sequence diagram illustrating the example of the evaluation of the accuracy of the estimated power consumption according to the embodiment.

First, as illustrated in FIG. 18, the information processing apparatus 1 stops the control of the charging of the batteries (S501). The control of the charging of the batteries is stopped in order to obtain the actual values of power consumption in "AC + charging/OFF" in a later process. As illustrated in FIG. 19, in S501, the operation state monitoring unit 8 of the information processing apparatus 1 requests the power control client 15a of the device 3a and the power control client 15b of the device 3b to cancel the notification at a time when the power state has changed. The power control clients 15a and 15b transmit responses indicating that the request has been accepted.

Next, the power information obtaining unit 11 obtains power consumption information from the distribution switchboard 2 (S502). More specifically, as illustrated in FIG. 19, the power information obtaining unit 11 of the information processing apparatus 1 transmits a signal for requesting the total power information to the distribution switchboard 2. Upon receiving the signal for requesting the total power information, the distribution switchboard 2 transmits the total power information to the power information obtaining unit 11. Upon receiving the total power information, the power information obtaining unit 11 transmits the obtained information to the estimation evaluation unit 13.

Thereafter, the operation information obtaining unit 10 of the information processing apparatus 1 obtains the operation information regarding the devices and stores the operation information in the storage unit 7 (S503). More specifically, as illustrated in FIG. 19, the operation information obtaining unit 10 transmits a signal for requesting the operation information regarding the devices to the distribution switchboard 2. Upon receiving the signal for requesting the operation information regarding the devices, the distribution switchboard 2 transmits the operation information regarding the devices to the operation information obtaining unit 10. Upon receiving the operation information regarding the devices, the operation information obtaining unit 10 stores the obtained information in the storage unit 7.

Next, the estimation evaluation unit 13 obtains information regarding estimated power consumption corresponding to the operation information from the storage unit 7 (S504). The storage unit 7 stores in advance the values of the estimated power consumption of the devices calculated in S103. As illustrated in FIG. 19, the estimation evaluation unit 13 extracts the information regarding the estimated power consumption of the devices corresponding to the operation information obtained in S503 from the storage unit 7, and transmits the information to the estimation evaluation unit 13.

Thereafter, the estimation evaluation unit 13 calculates a difference between the total value of the estimated power consumption and the value of the total power consumption (S505). More specifically, the estimation evaluation unit 13 calculates the total value by adding the values of the estimated power consumption of the devices extracted from the storage unit 7 in S504. The estimation evaluation unit 13 then calculates the difference between the total value and the value of the total power consumption obtained in S502. The difference corresponds to the accuracy of the estimated power consumption.

Now, in FIG. 2, the estimation evaluation unit 13 determines whether or not the calculated accuracy of the estimated power consumption satisfies a condition (S106).

As illustrated in FIG. 18, after calculating the difference in S505, the estimation evaluation unit 13 determines whether or not the difference is smaller than or equal to a certain threshold (S506). The certain threshold may be set in accordance with the level of accuracy desired by the electric utility. If the estimation evaluation unit 13 determines that the difference is smaller than or equal to the certain threshold (YES in S506), the estimation evaluation unit 13 waits for a next evaluation timing (S507), and the process ends. On the other hand, if the estimation evaluation unit 13 determines that the difference is larger than the certain threshold (NO in S506), the process returns from S106 to S102 as illustrated in FIG. 2 and the processing in S102 and later is repeated, in order to execute the control of the power states and the calculation of the estimated power consumption again.

The accuracy of the estimated power consumption may be evaluated in the above-described manner.

Modification

Next, an example of the operation of an information processing system according to a modification of the embodiment will be described.

For example, if control is performed such that a battery is not charged when the power state of a device 3 has changed from on to off while the charge level of the battery of the device 3 is below a certain threshold, the device 3 might not be activated even if an attempt to activate the device 3 is made again while the device 3 is disconnected to an AC power supply, because the amount of charge remaining in the battery is insufficient. Therefore, in the modification, whether or not the charge level of a battery included in a device 3 whose power state has changed from on to off is equal to or higher than a certain reference value is determined for the device before control is performed such that the battery is not charged.

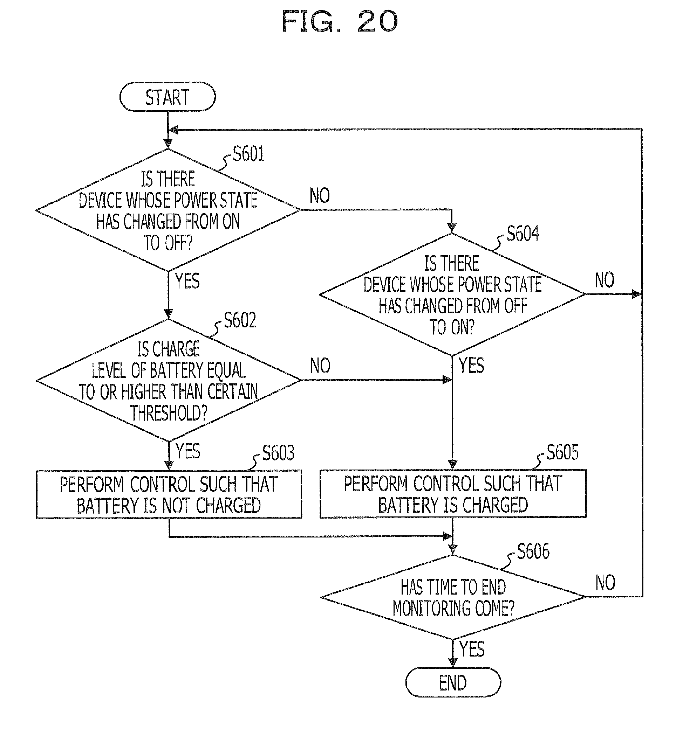

FIG. 20 is a flowchart illustrating an example of a method for controlling the power states of devices used by the information processing apparatus according to the modification of the embodiment. As illustrated in FIG. 20, the operation state monitoring unit 8 determines whether or not there is any device 3 whose power state has changed from on to off while monitoring the operation states of the devices 3 through a thread process and signals received from the devices 3 (S601). If the operation state monitoring unit 8 determines that there is any device 3 whose power state has changed from on to off (YES in S601), the operation state monitoring unit 8 determines whether or not the charge level of a battery included in the device 3 is equal to or higher than a certain threshold (S602).

Various techniques are known as methods for measuring the charge level. For example, capacity information indicating the total capacity of a battery is stored in advance, the amount of charge remaining in the battery is calculated by subtracting the amount of current discharged obtained by accumulating discharge current values of the battery from the total capacity, and the charge level, which is a ratio of the amount of charge remaining to the total capacity, may be calculated based on the calculated amount of charge remaining. A threshold for the charge level set in the embodiment is, for example, 10%.

If the operation state monitoring unit 8 determines that the charge level of the battery is equal to or higher than the certain threshold (YES in S602), the power state control unit 9 controls the device 3 whose power state has changed from on to off such that the battery is not charged (S603). On the other hand, if the operation state monitoring unit 8 determines that the amount of charge remaining in the battery is below the certain threshold (NO in S602), the power state control unit 9 controls the device 3 whose power state has changed from on to off such that the battery is charged (S605).

On the other hand, if the operation state monitoring unit 8 determines that there is no device 3 whose power state has changed from on to off (NO in S601), the process proceeds to S604, and the operation state monitoring unit 8 determines whether or not there is any device 3 whose power state has changed from off to on.

If the operation state monitoring unit 8 determines that there is any device 3 whose power state has changed from off to on (YES in S604), the power state control unit 9 of the information processing apparatus 1 transmits a command to begin to charge the battery to the device 3a, whose power state is assumed here to have changed from off to on, and controls the device 3a such that the battery is charged as illustrated in part (c) of FIG. 5 (S605). On the other hand, if the operation state monitoring unit 8 determines that there is no device 3 whose power state has changed from off to on (NO in S604), the process returns to S601.

After executing the processing in S605, the operation state monitoring unit 8 determines whether or not a time to end the monitoring has come (S606). The operation state monitoring unit 8 may make the determination as to the time to end the monitoring based on, for example, the information regarding the period in which the information is obtained stored in the storage unit 7 by the initial setting unit 5 in S101, that is, more specifically, the information regarding a time at which the operation state monitoring unit 8 obtains the operation information for the last time. Alternatively, the determination may be made based on whether or not the operation state monitoring unit 8 has received a signal for stopping the monitoring of the operation states from the power calculation unit 12, the estimation evaluation unit 13, or the like.

If the operation state monitoring unit 8 determines that the time to end the monitoring has come (YES in S606), the operation state monitoring unit 8 ends the monitoring. After the monitoring is ended, a battery may be charged when the power state of a device has changed from on to off. On the other hand, if the operation state monitoring unit 8 determines that the time to end the monitoring has not yet come (NO in S606), the process proceeds to S601.

Thus, when the power state of a device whose amount of charge remaining in the battery is below the threshold has changed from on to off, control is performed not such that the battery is not charged but such that the battery is charged until the amount of charge of the battery becomes equal to or larger than the threshold. According to this method, the amount of charge remaining in the battery does not become insufficient even when the power state of a device has changed from off to on while the device is disconnected from an AC power supply, and accordingly the device may be activated using power supplied from the battery.

Although the preferred embodiment has been described in detail above, the technique disclosed herein is not limited to a particular embodiment, and may be modified or altered in various ways. For example, in the expression (1), a larger row number indicates that a time at which data regarding the total power consumption is obtained is more recent, but a larger row number may indicate that a time at which data regarding the total power consumption is obtained is earlier.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment of the present invention has been described in detail, it should be understood that the various changes, substitutions, and alterations could be made hereto without departing from the spirit and scope of the invention.

**Claims**

1. An information processing apparatus comprising:

   a power state control unit configured to perform control, when it has been detected that there is a device among a plurality of devices each including a battery charged by at least part of power supplied from an alternating power supply for which a state of an external power supply has changed from on to off, such that the battery of the device for which the state of the external power supply has changed from on to off is not charged,
   an operation information obtaining unit configured to obtain a plurality of pieces of information regarding operation states, in each of which information regarding the state of the external power supply and information regarding a power receiving state are associated with each other, from the plurality of devices,
   a power information obtaining unit configured to obtain total power information including a total value of power consumption of the plurality of devices corresponding to the plurality of pieces of information regarding the operation states, and
   a power calculation unit configured to calculate the power consumption of each of the plurality of devices in each operation state based on the total power information and each of the plurality of pieces of information regarding the operation states.

2. The information processing apparatus according to claim 1,
   wherein the power state control unit is configured to determine, when there is no device for which the state of the external power supply has changed from on to off, whether or not there is a device for which the state of the external power supply has changed from off to on.

3. The information processing apparatus according to claim 1,
   wherein the power state control unit is configured to
   determine, when it is detected that there is a device for which the state of the external power supply has changed from on to off, whether or not an amount of charge remaining in the battery of the device for which the state of the external power supply has changed from on to off is below a certain threshold, and
   perform control, when the amount of charge remaining is below the certain threshold, such that the battery of the device for which the state of the external power supply has changed from on to off is charged.

4. The information processing apparatus according to claim 1,
   wherein the information regarding the power state of each device is information indicating whether the power state of each device is on, off, or standby.

5. The information processing apparatus according to claim 1,
   wherein the information regarding the power receiving state of each device is information indicating whether each device is receiving power from an alternating current (AC) power supply but the battery is not being charged, each device is receiving power from the AC power supply and the battery is being charged, or each device is not receiving power from the AC power supply and the power of the battery is being consumed.

6. The information processing apparatus according to claim 1,
   wherein the power calculation unit is configured to calculate the power consumption in each operation state by calculating a linear coefficient relating to each of the plurality of pieces of information regarding the operation states at a time when the total power information is expressed by a multiple regression equation that uses each of the plurality of pieces of information regarding the operation states as a function.

7. The information processing apparatus according to claim 1,
wherein the information processing apparatus further comprising an estimation evaluation unit configured to determine accuracy of the calculated power consumption in each operation state by comparing the power consumption in each operation state calculated for each of the plurality of devices with power consumption of each of the plurality of devices obtained after the calculation, and the power calculation unit calculates, when the accuracy does not satisfy a certain condition, the power consumption of each of the plurality of devices in each operation state again.

8. A method for processing information used by an information processing apparatus, the method comprising:

performing control, when it has been detected that there is a device among a plurality of devices each including a battery charged by at least part of power supplied from an alternating power supply for which a state of an external power supply has changed from on to off, such that the battery of the device for which the state of the external power supply has changed from on to off is not charged;
obtaining a plurality of pieces of information regarding operation states, in each of which information regarding the state of the external power supply and information regarding a power receiving state are associated with each other, from the plurality of devices;
obtaining total power information including a total value of power consumption of the plurality of devices corresponding to the plurality of pieces of information regarding the operation states; and
calculating the power consumption of each of the plurality of devices in each operation state based on the total power information and each of the plurality of pieces of information regarding the operation states.

9. An information processing system comprising:

a distribution switchboard;
a plurality of devices, each of which is electrically coupled to the distribution switchboard and includes a battery charged by at least part of power supplied from an alternating power supply; and
an information processing apparatus configured to calculate power consumption of each of the plurality of devices,
wherein the information processing apparatus is configured to
perform control, when it has been detected that there is a device among the plurality of devices for which a state of an external power supply has changed from on to off, such that the battery of the device for which the state of the external power supply has changed from on to off is not charged,
obtain a plurality of pieces of information regarding operation states, in each of which information regarding the state of the external power supply and information regarding a power receiving state are associated with each other, from the plurality of devices,
obtain total power information including a total value of the power consumption of the plurality of devices corresponding to the plurality of pieces of information regarding the operation states, and
calculate the power consumption of each of the plurality of devices in each operation state based on the total power information and each of the plurality of pieces of information regarding the operation states.

10. A non-transitory computer-readable recording medium storing a program for causing a computer to execute a process, the process comprising:

performing control, when it has been detected that there is a device among a plurality of devices each including a battery charged by at least part of power supplied from an alternating power supply for which a state of an external power supply has changed from on to off, such that the battery of the device for which the state of the external power supply has changed from on to off is not charged;
obtaining a plurality of pieces of information regarding operation states, in each of which information regarding the state of the external power supply and information regarding a power receiving state are associated with each other, from the plurality of devices;
obtaining total power information including a total value of power consumption of the plurality of devices corresponding to the plurality of pieces of information regarding the operation states; and
calculating the power consumption of each of the plurality of devices in each operation state based on the total power information and each of the plurality of pieces of information regarding the operation states.

# FIG. 1

DISTRIBUTION SWITCHBOARD — 2

INPUT/OUTPUT IF — 14

INFORMATION PROCESSING APPARATUS — 1

DEVICE — 3(3b)
DEVICE — 3(3a)
15(15a)
15(15b)

DEVICE — 3(3d)
DEVICE — 3(3c)
15(15c)
15(15d)

DEVICE — 4(4a)

DEVICE — 4(4b)

POWER INFORMATION OBTAINING UNIT — 11

ESTIMATION EVALUATION UNIT — 13

OPERATION INFORMATION OBTAINING UNIT — 10

POWER CALCULATION UNIT — 12

POWER STATE CONTROL UNIT — 9

OPERATION STATE MONITORING UNIT — 8

INITIAL SETTING UNIT — 5

INPUT APPARATUS — 6

STORAGE UNIT — 7

# FIG. 2

```
                    ┌─────────────┐
                    │    START    │
                    └─────────────┘
                           │
                           ▼
        ┌──────────────────────────────────────┐
        │ SET DEVICES TO BE CONTROLLED AND PERIOD│ ── S101
        │    IN WHICH INFORMATION IS OBTAINED    │
        └──────────────────────────────────────┘
                           │
                           ▼
        ┌──────────────────────────────────────┐
        │  MONITOR OPERATION STATES OF DEVICES   │ ── S102
        │   AND CONTROL CHARGING OF BATTERIES    │
        └──────────────────────────────────────┘
                           │
                           ▼
        ┌──────────────────────────────────────┐
        │   OBTAIN TOTAL POWER INFORMATION AND   │ ── S103
        │   OPERATION INFORMATION AND CALCULATE  │
        │ ESTIMATED POWER CONSUMPTION OF DEVICES │
        └──────────────────────────────────────┘
                           │
                           ▼
                      S104
              ◇───────────────────────◇    NO
              │ IS CURRENT TIME TIMING  │ ──────┐
              │   AT WHICH ACCURACY IS   │       │
              │     TO BE EVALUATED?     │       │
              ◇───────────────────────◇         │
                           │ YES                 │
                           ▼                     │
        ┌──────────────────────────────────────┐ │
        │   CALCULATE ACCURACY OF ESTIMATED      │ ── S105
        │         POWER CONSUMPTION              │ │
        └──────────────────────────────────────┘ │
                           │                     │
                           ▼                     │
                      S106                       │
              ◇───────────────────────◇    NO    │
              │  DOES ACCURACY SATISFY  │ ────────┘
              │       CONDITION?        │
              ◇───────────────────────◇
                           │ YES
                           ▼
                    ┌─────────────┐
                    │     END     │
                    └─────────────┘
```

# FIG. 3A

|  | ON | OFF |
|---|---|---|
| AC | Wac | 0 |

# FIG. 3B

|  | ON | STANDBY | OFF |
|---|---|---|---|
| AC | Wac | Wstb | 0 |
| AC + CHARGING | Wac+Wch | Wstb+Wch | Wch |
| BATTERY | 0 | 0 | 0 |

# FIG. 3C

|  | ON | STANDBY | OFF |
|---|---|---|---|
| AC | Wac | Wstb | 0 |
| AC+CHARGE | Wac+Wch | Wstb+Wch | 0 |
| BATTERY | 0 | 0 | 0 |

# FIG. 4

```
                          ┌─────────┐
                          │  START  │
                          └────┬────┘
                               │
                               ▼
                          ╱─────────╲                    ┌─────────────────────────────────────────┐
                        ╱   IS THERE   ╲  ┌─S201          │                                         │
                      ╱  DEVICE WHOSE    ╲                │                                         │
                     ╱  POWER STATE HAS   ╲ ──NO──┐       │                                         │
                      ╲ CHANGED FROM ON  ╱        │       │                                         │
                        ╲   TO OFF?    ╱          ▼       │                                         │
                          ╲─────────╱        ╱─────────╲  ┌─S203                                    │
                               │           ╱   IS THERE   ╲                                         │
                              YES        ╱  DEVICE WHOSE    ╲                                       │
                               │        ╱  POWER STATE HAS   ╲ ──NO──────────────────────┐         │
                               │         ╲ CHANGED FROM OFF ╱                             │         │
                               │           ╲   TO ON?    ╱                                │         │
                               │             ╲─────────╱                                 │         │
                               │                  │                                      │         │
                               │                 YES  ┌─S204                             │         │
                               ▼                  ▼                                      │         │
              ┌─S202  ┌──────────────────┐  ┌──────────────────┐                         │         │
              │       │ PERFORM CONTROL  │  │ PERFORM CONTROL  │                         │         │
                      │   SUCH THAT      │  │   SUCH THAT      │                         │         │
                      │ BATTERY IS NOT   │  │ BATTERY IS       │                         │         │
                      │    CHARGED       │  │   CHARGED        │                         │         │
                      └────────┬─────────┘  └────────┬─────────┘                         │         │
                               │                     │                                   │         │
                               └──────────────────►  ▼                                   │         │
                                              ╱─────────╲  ┌─S205                         │         │
                                            ╱  HAS TIME   ╲                               │         │
                                           ╱   TO END      ╲ ──NO─────────────────────────┘         │
                                            ╲ MONITORING  ╱                                         │
                                              ╲ COME?   ╱                                           │
                                               ╲─────╱                                             │
                                                 │                                                 │
                                                YES                                                │
                                                 ▼                                                 │
                                          ┌──────────┐                                             │
                                          │   END    │                                             │
                                          └──────────┘                                             │
```

# FIG. 5

# FIG. 6

START

S301
IS CURRENT TIME TIMING
AT WHICH VARIOUS PIECES OF INFORMATION ARE
TO BE OBTAINED? — NO

↓YES

OBTAIN TOTAL POWER INFORMATION y FROM
DISTRIBUTION SWITCHBOARD AND STORE TOTAL POWER — S302
INFORMATION y IN STORAGE UNIT

OBTAIN OPERATION INFORMATION A' REGARDING DEVICES — S303
AND STORE OPERATION INFORMATION IN STORAGE UNIT

S304
IS CURRENT TIME TIME AT
WHICH OBTAINING OF VARIOUS PIECES OF — NO
INFORMATION ENDS?

↓YES

READ INFORMATION STORED IN STORAGE UNIT — S305

CALCULATE x' USING MATRIX $y = A'x'$ — S306

CALCULATE POWER CONSUMPTION IN "AC +
CHARGING/OFF" — S307

CALCULATE POWER CONSUMPTION IN EACH OPERATION STATE AND — S308
STORE POWER CONSUMPTION IN STORAGE UNIT

END

# FIG. 7

EP 2 667 474 A2

# FIG. 8

| TIME | | TOTAL POWER | DEVICE 3a | | | | DEVICE 3b | | | | DEVICE 4 |
|---|---|---|---|---|---|---|---|---|---|---|---|
| | | | $A_{1a}$ | $A_{1b}$ | $A_{1c}$ | $A_{1d}$ | $A_{2a}$ | $A_{2b}$ | $A_{2c}$ | $A_{2d}$ | $A_z$ |
| 2011/11/1 | 9:00 | 15.6 | 0 | 0 | 0 | 0 | 0 | 0 | 0 | 0 | 1 |
| 2011/11/1 | 9:15 | 93.5 | 0 | 0 | 0 | 0 | 0 | 0 | 1 | 0 | 1 |
| 2011/11/1 | 9:30 | 147.8 | 0 | 0 | 1 | 0 | 0 | 0 | 1 | 0 | 1 |
| 2011/11/1 | 9:45 | 94.4 | 0 | 0 | 0 | 0 | 0 | 0 | 1 | 0 | 1 |
| 2011/11/1 | 10:00 | 91.8 | 0 | 0 | 0 | 0 | 0 | 0 | 1 | 0 | 1 |
| 2011/11/1 | 10:15 | 14.7 | 0 | 0 | 0 | 0 | 0 | 0 | 0 | 0 | 1 |
| 2011/11/1 | 10:30 | 75.6 | 0 | 0 | 1 | 0 | 0 | 0 | 0 | 0 | 1 |
| 2011/11/1 | 10:45 | 53.9 | 0 | 0 | 0 | 1 | 0 | 0 | 0 | 0 | 1 |
| 2011/11/1 | 11:00 | 132.3 | 0 | 0 | 0 | 1 | 0 | 0 | 1 | 0 | 1 |
| 2011/11/1 | 11:15 | 94.8 | 0 | 1 | 0 | 0 | 0 | 0 | 1 | 0 | 1 |
| 2011/11/1 | 11:30 | 62.7 | 0 | 1 | 0 | 0 | 0 | 0 | 0 | 1 | 1 |
| 2011/11/1 | 11:45 | 84.1 | 1 | 0 | 0 | 0 | 0 | 0 | 0 | 1 | 1 |
| 2011/11/1 | 12:00 | 105.3 | 1 | 0 | 0 | 0 | 0 | 0 | 1 | 0 | 1 |
| 2011/11/1 | 12:15 | 14.7 | 0 | 0 | 0 | 0 | 0 | 0 | 0 | 0 | 1 |
| 2011/11/1 | 12:30 | 86.0 | 0 | 0 | 0 | 0 | 0 | 0 | 1 | 0 | 1 |
| 2011/11/1 | 12:45 | 42.9 | 0 | 0 | 0 | 0 | 1 | 0 | 0 | 0 | 1 |
| 2011/11/1 | 13:00 | 68.0 | 1 | 0 | 0 | 0 | 1 | 0 | 0 | 0 | 1 |
| 2011/11/1 | 13:15 | 45.1 | 0 | 1 | 0 | 0 | 1 | 0 | 0 | 0 | 1 |
| 2011/11/1 | 13:30 | 16.9 | 0 | 1 | 0 | 0 | 0 | 1 | 0 | 0 | 1 |
| 2011/11/1 | 13:45 | 38.0 | 1 | 0 | 0 | 0 | 0 | 1 | 0 | 0 | 1 |
| 2011/11/1 | 14:00 | 16.8 | 0 | 0 | 0 | 0 | 0 | 1 | 0 | 0 | 1 |

$A_{1a}$: AC/ON
$A_{1b}$: AC/STANDBY
$A_{1c}$: AC+CHARGING/ON
$A_{1d}$: AC+CHARGING/STANDBY
$A_{2a}$: AC/ON
$A_{2b}$: AC/STANDBY
$A_{2c}$: AC+CHARGING/ON
$A_{2d}$: AC+CHARGE/STANDBY

# FIG. 9

MATRIX y (21-BY-1)

| 15.6 |
|------|
| 93.5 |
| 147.8 |
| 94.4 |
| 91.8 |
| 14.7 |
| 75.6 |
| 53.9 |
| 132.3 |
| 94.8 |
| 62.7 |
| 84.1 |
| 105.3 |
| 14.7 |
| 86.0 |
| 42.9 |
| 68.0 |
| 45.1 |
| 16.9 |
| 38.0 |
| 16.8 |

MATRIX A' (21-BY-9)

| $A_{1a}$ | $A_{1b}$ | $A_{1c}$ | $A_{1d}$ | $A_{2a}$ | $A_{2b}$ | $A_{2c}$ | $A_{2d}$ | $A_z$ |
|------|------|------|------|------|------|------|------|------|
| 0 | 0 | 0 | 0 | 0 | 0 | 0 | 0 | 1 |
| 0 | 0 | 0 | 0 | 0 | 0 | 1 | 0 | 1 |
| 0 | 0 | 1 | 0 | 0 | 0 | 1 | 0 | 1 |
| 0 | 0 | 0 | 0 | 0 | 0 | 1 | 0 | 1 |
| 0 | 0 | 0 | 0 | 0 | 0 | 1 | 0 | 1 |
| 0 | 0 | 0 | 0 | 0 | 0 | 0 | 0 | 1 |
| 0 | 0 | 1 | 0 | 0 | 0 | 0 | 0 | 1 |
| 0 | 0 | 0 | 1 | 0 | 0 | 0 | 0 | 1 |
| 0 | 0 | 0 | 1 | 0 | 0 | 1 | 0 | 1 |
| 0 | 1 | 0 | 0 | 0 | 0 | 1 | 0 | 1 |
| 0 | 1 | 0 | 0 | 0 | 0 | 0 | 1 | 1 |
| 1 | 0 | 0 | 0 | 0 | 0 | 0 | 1 | 1 |
| 1 | 0 | 0 | 0 | 0 | 0 | 1 | 0 | 1 |
| 0 | 0 | 0 | 0 | 0 | 0 | 0 | 0 | 1 |
| 0 | 0 | 0 | 0 | 0 | 0 | 1 | 0 | 1 |
| 0 | 0 | 0 | 0 | 1 | 0 | 0 | 0 | 1 |
| 1 | 0 | 0 | 0 | 1 | 0 | 0 | 0 | 1 |
| 0 | 1 | 0 | 0 | 1 | 0 | 0 | 0 | 1 |
| 0 | 1 | 0 | 0 | 0 | 1 | 0 | 0 | 1 |
| 1 | 0 | 0 | 0 | 0 | 1 | 0 | 0 | 1 |
| 0 | 0 | 0 | 0 | 0 | 1 | 0 | 0 | 1 |

$A_{1a}$: AC/ON

$A_{1b}$: AC/STANDBY

$A_{1c}$: AC+CHARGING/ON

$A_{1d}$: AC+CHARGING/STANDBY

$A_{2a}$: AC/ON

$A_{2b}$: AC/STANDBY

$A_{2c}$: AC+CHARGING/ON

$A_{2d}$: AC+CHARGING/STANDBY

# FIG. 10

MATRIX $A^{\prime T}$ (9-BY-21)

| | | | | | | | | | | | | | | | | | | | | |
|---|---|---|---|---|---|---|---|---|---|---|---|---|---|---|---|---|---|---|---|---|
| 0 | 0 | 0 | 0 | 0 | 0 | 0 | 0 | 0 | 0 | 0 | 1 | 1 | 0 | 0 | 0 | 1 | 0 | 0 | 1 | 0 |
| 0 | 0 | 0 | 0 | 0 | 0 | 0 | 0 | 0 | 1 | 1 | 0 | 0 | 0 | 0 | 0 | 0 | 1 | 1 | 0 | 0 |
| 0 | 0 | 1 | 0 | 0 | 0 | 1 | 0 | 0 | 0 | 0 | 0 | 0 | 0 | 0 | 0 | 0 | 0 | 0 | 0 | 0 |
| 0 | 0 | 0 | 0 | 0 | 0 | 0 | 1 | 1 | 0 | 0 | 0 | 0 | 0 | 0 | 0 | 0 | 0 | 0 | 0 | 0 |
| 0 | 0 | 0 | 0 | 0 | 1 | 0 | 0 | 0 | 0 | 0 | 0 | 0 | 0 | 0 | 1 | 1 | 1 | 0 | 0 | 0 |
| 0 | 0 | 0 | 0 | 0 | 0 | 0 | 0 | 0 | 0 | 0 | 0 | 0 | 0 | 0 | 0 | 0 | 0 | 1 | 1 | 1 |
| 0 | 1 | 1 | 1 | 1 | 0 | 0 | 0 | 1 | 1 | 0 | 0 | 1 | 0 | 1 | 0 | 0 | 0 | 0 | 0 | 0 |
| 0 | 0 | 0 | 0 | 0 | 0 | 0 | 0 | 0 | 0 | 1 | 1 | 0 | 0 | 0 | 0 | 0 | 0 | 0 | 0 | 0 |
| 1 | 1 | 1 | 1 | 1 | 1 | 1 | 1 | 1 | 1 | 1 | 1 | 1 | 1 | 1 | 1 | 1 | 1 | 1 | 1 | 1 |

# FIG. 11

MATRIX A'$^{T}$ × A' (9-BY-9)

| 4 | 0 | 0 | 0 | 1 | 1 | 1 | 1 | 4 |
|---|---|---|---|---|---|---|---|---|
| 0 | 4 | 0 | 0 | 1 | 1 | 1 | 1 | 4 |
| 0 | 0 | 2 | 0 | 0 | 0 | 1 | 0 | 2 |
| 0 | 0 | 0 | 2 | 0 | 0 | 1 | 0 | 2 |
| 1 | 1 | 0 | 0 | 3 | 0 | 0 | 0 | 3 |
| 1 | 1 | 0 | 0 | 0 | 3 | 0 | 0 | 3 |
| 1 | 1 | 1 | 1 | 0 | 0 | 8 | 0 | 8 |
| 1 | 1 | 0 | 0 | 0 | 0 | 0 | 2 | 2 |
| 4 | 4 | 2 | 2 | 3 | 3 | 8 | 2 | 21 |

# FIG. 12

## MATRIX $(A'^T \times A')-1$ (9-BY-9)

| $A_{1a}$ | $A_{1b}$ | $A_{1c}$ | $A_{1d}$ | $A_{2a}$ | $A_{2b}$ | $A_{2c}$ | $A_{2d}$ | $A_z$ |
|------|------|------|------|------|------|------|------|------|
| 0.49 | 0.24 | 0.07 | 0.07 | -0.2 | -0.2 | -0.1 | -0.3 | -0 |
| 0.24 | 0.49 | 0.07 | 0.07 | -0.2 | -0.2 | -0.1 | -0.3 | -0 |
| 0.07 | 0.07 | 0.63 | 0.13 | 0.11 | 0.11 | 0.04 | 0.09 | -0.2 |
| 0.07 | 0.07 | 0.13 | 0.63 | 0.11 | 0.11 | 0.04 | 0.09 | -0.2 |
| -0.2 | -0.2 | 0.11 | 0.11 | 0.72 | 0.39 | 0.27 | 0.46 | -0.2 |
| -0.2 | -0.2 | 0.11 | 0.11 | 0.39 | 0.72 | 0.27 | 0.46 | -0.2 |
| -0.1 | -0.1 | 0.04 | 0.04 | 0.27 | 0.27 | 0.35 | 0.3 | -0.2 |
| -0.3 | -0.3 | 0.09 | 0.09 | 0.46 | 0.46 | 0.3 | 1.07 | -0.2 |
| -0 | -0 | -0.2 | -0.2 | -0.2 | -0.2 | -0.2 | -0.2 | 0.26 |

FIG. 13

MATRIX $A^{\prime T} \times y$ (9-BY-1)

| |
|---|
| 295.4 |
| 219.5 |
| 223.4 |
| 186.2 |
| 156.0 |
| 71.7 |
| 845.9 |
| 146.8 |
| 1394.9 |

FIG. 14

MATRIX X" (9-BY-1)

| |
|---|
| 19.9 |
| 0.9 |
| 58.8 |
| 40.2 |
| 29.9 |
| 1.8 |
| 75.6 |
| 47.9 |
| 15.1 |

# FIG. 15

| | DEVICE 3a | | | | DEVICE 3b | | | DEVICE 4 |
|---|---|---|---|---|---|---|---|---|
| $X_{1a}$ | $X_{1b}$ | $X_{1c}$ | $X_{1d}$ | $X_{2a}$ | $X_{2b}$ | $X_{2c}$ | $X_{2d}$ | $X_z$ |
| 19.9 | 0.9 | 58.8 | 40.2 | 29.9 | 1.8 | 75.6 | 47.9 | 15.1 |

AC/ON

AC/STANDBY

AC+CHARGING/ON

AC+CHARGING/STANDBY

AC/ON

AC/STANDBY

AC+CHARGING/ON

AC+CHARGING/STANDBY

# FIG. 16A

| POWER STATE / POWER RECEIVING STATE | ON | STANDBY | OFF |
|---|---|---|---|
| AC | 19.9 | 0.9 | 0 |
| AC + CHARGING | 58.8 | 40.2 | 39.1 |
| BATTERY | 0 | 0 | 0 |

# FIG. 16B

| POWER STATE / POWER RECEIVING STATE | ON | STANDBY | OFF |
|---|---|---|---|
| AC | 29.9 | 1.8 | 0 |
| AC + CHARGING | 75.6 | 47.9 | 45.9 |
| BATTERY | 0 | 0 | 0 |

# FIG. 17

START

RECEIVE SIGNAL FROM INFORMATION PROCESSING APPARATUS — S401

S402 — IS RECEIVED SIGNAL REQUEST TO OBTAIN OPERATION INFORMATION REGARDING DEVICE?

YES → OBTAIN OPERATION INFORMATION FROM CORRESPONDING DEVICE AND TRANSMIT OPERATION INFORMATION TO INFORMATION PROCESSING APPARATUS — S403

NO

S404 — IS RECEIVED SIGNAL NOTIFICATION REQUEST OR NOTIFICATION CANCEL REQUEST?

YES → ACCEPT NOTIFICATION REQUEST OR NOTIFICATION CANCEL REQUEST AND TRANSMIT RESPONSE INDICATING ACCEPTANCE — S405

NO

S406 — IS RECEIVED SIGNAL REQUEST RELATING TO CONTROL OF CHARGING OF BATTERY?

YES → CONTROL CHARGING OF BATTERY — S407

NO

S408 — HAS NOTIFICATION REQUEST BEEN ACCEPTED AND HAS CHANGE IN POWER STATE BEEN DETECTED?

NO

YES

NOTIFY INFORMATION PROCESSING APPARATUS OF CHANGE IN POWER STATE — S409

END

# FIG. 18

```
                    ┌─────────┐
                    │  START  │
                    └─────────┘
                         │
                         ▼
    ┌──────────────────────────────────────┐
    │ STOP MONITORING OF OPERATION STATES AND │── S501
    │   CONTROL OF CHARGING OF BATTERIES      │
    └──────────────────────────────────────┘
                         │
                         ▼
    ┌──────────────────────────────────────┐
    │  OBTAIN POWER CONSUMPTION INFORMATION  │
    │ FROM DISTRIBUTION SWITCHBOARD AND STORE │── S502
    │      POWER CONSUMPTION INFORMATION IN   │
    │              STORAGE UNIT               │
    └──────────────────────────────────────┘
                         │
                         ▼
    ┌──────────────────────────────────────┐
    │  OBTAIN OPERATION INFORMATION REGARDING │
    │ DEVICES AND STORE OPERATION INFORMATION │── S503
    │              IN STORAGE UNIT            │
    └──────────────────────────────────────┘
                         │
                         ▼
    ┌──────────────────────────────────────┐
    │      OBTAIN INFORMATION REGARDING      │
    │        ESTIMATED POWER CONSUMPTION     │── S504
    │       CORRESPONDING TO OPERATION       │
    │    INFORMATION FROM STORAGE UNIT        │
    └──────────────────────────────────────┘
                         │
                         ▼
    ┌──────────────────────────────────────┐
    │ CALCULATE DIFFERENCE BETWEEN TOTAL     │
    │ POWER CONSUMPTION AND TOTAL VALUE      │── S505
    │   OF ESTIMATED POWER CONSUMPTION        │
    └──────────────────────────────────────┘
                         │
                         ▼
                   ◇ S506
              IS DIFFERENCE
        SMALLER THAN OR EQUAL TO CERTAIN ──── NO
              THRESHOLD?                         │
                   │ YES                          │
                   ▼                              ▼
    ┌──────────────────────────────┐   ┌──────────────────────────────┐
    │ WAIT FOR NEXT EVALUATION TIMING│── S507   │ CONTROL POWER STATES AND CALCULATE │── S508
    └──────────────────────────────┘   │ ESTIMATED POWER CONSUMPTION AGAIN  │
                   │                    └──────────────────────────────┘
                   ▼
              ┌─────────┐
              │   END   │
              └─────────┘
```

34

# FIG. 19

# FIG. 20

START

S601
IS THERE
DEVICE WHOSE POWER STATE
HAS CHANGED FROM ON
TO OFF?
— NO →

YES

S602
IS CHARGE
LEVEL OF BATTERY EQUAL
TO OR HIGHER THAN CERTAIN
THRESHOLD?
— NO →

YES

S603
PERFORM CONTROL SUCH THAT
BATTERY IS NOT CHARGED

S604
IS THERE
DEVICE WHOSE POWER STATE
HAS CHANGED FROM OFF
TO ON?
— NO →

YES

S605
PERFORM CONTROL SUCH THAT
BATTERY IS CHARGED

S606
HAS TIME TO END
MONITORING COME?
— NO →

YES

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5233011 A
- JP 2004280618 A
- JP 2005258530 A
- JP 2010225133 A